(19) **Europäisches Patentamt European Patent Office Office européen des brevets**

(11) **EP 1 402 751 B1**

(12) **FASCICULE DE BREVET EUROPEEN**

| | |
|---|---|
| (45) Date de publication et mention de la délivrance du brevet: **20.04.2011 Bulletin 2011/16** | (51) Int Cl.: **H04W 72/08** (2009.01) **H04B 17/00** (2006.01) |
| (21) Numéro de dépôt: **02718247.6** | (86) Numéro de dépôt international: **PCT/FR2002/000821** |
| (22) Date de dépôt: **07.03.2002** | (87) Numéro de publication internationale: **WO 2003/005753 (16.01.2003 Gazette 2003/03)** |

(54) **PROCEDE DE CONTROLE DE RESSOURCES RADIO AFFECTEES A UNE COMMUNICATION ENTRE UN TERMINAL MOBILE ET UNE INFRASTRUCTURE CELLULAIRE A ETALEMENT DE SPECTRE ET EQUIPEMENTS POUR LA MISE EN OEUVRE DU PROCEDE**

KONTROLVERFAHREN FÜR RADIORESOURCEN, DIE EINER VERBINDUNG ZWISCHEN EINEM ENDGERÄT UND EINER ZELLULAREN SPREIZSPEKTRUM INFRASTRUKTUR ZUGETEILT SIND, UND VORRICHTUNGEN ZUR IMPLEMENTIERUNG DES VERFAHRENS

METHOD FOR CONTROLLING RADIO RESOURCES ASSIGNED TO A COMMUNICATION BETWEEN A MOBILE TERMINAL AND A SPREAD SPECTRUM CELLULAR INFRASTRUCTURE AND EQUIPMENT THEREFOR

| | |
|---|---|
| (84) Etats contractants désignés: **AT BE CH CY DE DK ES FI FR GB GR IE IT LI LU MC NL PT SE TR** | • **BEN RACHED, Nidham F-75017 Paris (FR)** • **ROUX, Pierre F-95100 Argenteuil (FR)** |
| (30) Priorité: **05.07.2001 FR 0108951** **15.11.2001 PCT/FR01/03580** | (74) Mandataire: **Bird, William Edward et al Bird Goën & Co Klein Dalenstraat 42A 3020 Winksele (BE)** |
| (43) Date de publication de la demande: **31.03.2004 Bulletin 2004/14** | |
| (73) Titulaire: **Nortel Networks Limited St. Laurent, QC H4S 2A9 (CA)** | (56) Documents cités: **WO-A-00/38456 WO-A-00/76251 WO-A-01/18991 WO-A-99/13675 US-A- 6 073 021** |
| (72) Inventeurs: • **LUCIDARME, Thierry F-78180 Montigny le Bretonneux (FR)** | |

## Description

La présente invention concerne le domaine des radiocommunications numériques à étalement de spectre. Elle trouve notamment application dans les réseaux cellulaires utilisant des méthodes d'accès multiple à répartition par codes (CDMA, "Code Division Multiple Access"), par exemple dans les réseaux de troisième génération du type UMTS ("Universal Mobile Telecommunication System").

Les techniques d'étalement de spectre ont pour particularité de permettre la prise en compte de trajets de propagation multiples entre l'émetteur et le récepteur, ce qui procure un gain en diversité de réception appréciable.

Un récepteur classiquement utilisé pour cela est le récepteur en râteau, ou "rake", qui comporte un certain nombre de "doigts" fonctionnant en parallèle pour estimer les symboles numériques transmis. Le gain en diversité de réception résulte de la combinaison des estimations obtenues dans les différents doigts du récepteur.

Dans un système CDMA à étalement de spectre, les symboles transmis, généralement binaires ($\pm$ 1) ou quaternaires ($\pm$ 1 $\pm$ j), sont multipliés par des codes d'étalement composés d'échantillons, appelés "chips", dont la cadence est supérieure à celle des symboles, dans un rapport appelé facteur d'étalement. Des codes d'étalement orthogonaux ou quasi-orthogonaux sont alloués à différents canaux partageant la même fréquence porteuse, afin de permettre à chaque récepteur de détecter la séquence de symboles qui lui est destinée, en multipliant le signal reçu par le code d'étalement correspondant.

Le récepteur rake traditionnel effectue une démodulation cohérente fondée sur une approximation de la réponse impulsionnelle du canal de propagation radio par une série de pics, chaque pic apparaissant avec un retard correspondant au temps de propagation le long d'un trajet particulier et ayant une amplitude complexe correspondant à l'atténuation et au déphasage du signal le long de ce trajet (réalisation instantanée du fading). En analysant plusieurs trajets de réception, c'est-à-dire en échantillonnant plusieurs fois la sortie d'un filtre adapté au code d'étalement du canal, avec dés retards correspondant respectivement à ces trajets, le récepteur rake obtient des estimations multiples des symboles transmis, qui sont combinées pour obtenir un gain en diversité. La combinaison peut notamment être effectuée selon la méthode dite MRC ("Maximum Ratio Combining"), qui pondère les différentes estimations en fonction des amplitudes complexes observées pour les différents trajets. Afin de permettre cette démodulation cohérente, des symboles pilotes peuvent être transmis avec les symboles d'information pour l'estimation de la réponse impulsionnelle sous forme d'une succession de pics.

En général, dans les systèmes cellulaires, l'émetteur-récepteur fixe desservant une cellule donnée émet en outre un signal de balise sur un canal pilote auquel est alloué un code d'étalement pilote déterminé. Ce code pilote est communiqué aux terminaux mobiles situés dans la cellule ou à proximité, au moyen d'informations système diffusées par les stations de base. Les terminaux effectuent des mesures de la puissance reçue sur les codes pilotes pertinents. Ces mesures permettent aux mobiles en veille d'identifier la meilleure cellule à utiliser s'ils ont à faire un accès aléatoire. Elles permettent aussi d'identifier en cours de communication la ou les cellules avec lesquelles les conditions de liaison radio sont les meilleures en vue d'effectuer un transfert intercellulaire de communication ("handover") en cas de nécessité.

Une autre particularité des systèmes CDMA à étalement de spectre est de pouvoir supporter un mode de macrodiversité. La macrodiversité consiste à prévoir qu'un terminal mobile puisse simultanément communiquer avec des émetteurs-récepteurs fixes distincts d'un ensemble actif ("active set"). Dans le sens descendant, le terminal mobile reçoit plusieurs fois la même information. Dans le sens montant, le signal radio émis par le terminal mobile est capté par les émetteurs-récepteurs fixes de l'ensemble actif pour former des estimations différentes ensuite combinées dans le réseau.

La macrodiversité procure un gain de réception qui améliore les performances du système grâce à la combinaison d'observations différentes d'une même information.

Elle permet également de réaliser des transferts intercellulaires en douceur (SHO, "soft handover"), lorsque le terminal mobile se déplace.

Le mode de macrodiversité conduit, dans le récepteur rake du terminal mobile, à attribuer les doigts alloués à une communication à des trajets appartenant à des canaux de propagation différents, issus de plusieurs émetteurs-récepteurs fixes et ayant généralement des codes d'étalement différents.

Du côté du réseau, le mode de macrodiversité réalise une sorte de récepteur rake macroscopique, dont les doigts sont situés dans des émetteurs-récepteurs différents. La combinaison des estimations est réalisée après décodage de canal dans une station de base si celle-ci regroupe tous les émetteurs-récepteurs concernées, ou sinon dans un contrôleur supervisant les stations de base.

Le mode de macrodiversité impose une certaine charge de signalisation dans le réseau lorsque l'ensemble actif relatif à un terminal doit être mis à jour. Il mobilise d'autre part des ressources d'émission et de réception supplémentaires dans les stations de base, ainsi que de la bande passante pour le transfert des données à combiner dans le réseau. Il est donc judicieux de n'y avoir recours que lorsque le gain de réception obtenu est significatif.

Ce gain de réception provient principalement de la multiplicité des trajets de propagation pris en considération. Or il est de nombreux cas où un canal de propagation (ou un petit nombre de tels canaux) présente des trajets suffisamment nombreux pour que l'adjonction d'un ou plusieurs émetteurs-récepteurs supplémentaires dans l'ensemble actif ne procure qu'un faible gain en termes de taux d'erreur binaire (BER), même si les conditions de réception sont correctes sur les canaux de propagation entre le terminal et ces émetteurs-récepteurs supplémentaires. Dans un tel cas, les liens de macrodiversité chargent le réseau sans grande utilité.

Dans un système CDMA tel que l'UMTS, la puissance d'émission sur l'interface radio est réglée par une procédure d'asservissement dans laquelle le récepteur renvoie à l'émetteur des commandes de contrôle de puissance (TPC) pour chercher à atteindre un objectif en termes de conditions de réception. Ces commandes TPC consistent en des bits émis à cadence assez élevée et dont la valeur indique si la puissance d'émission doit être augmentée ou diminuée.

Dans le cas d'une communication en macrodiversité, les différents émetteurs-récepteurs fixes de l'ensemble actif reçoivent du terminal mobile des bits TPC identiques. Des termes correctifs respectifs peuvent être pris en compte par ces émetteurs-récepteurs fixes en vue d'équilibrer les puissances émises. Or, pour un ensemble actif donné, si un premier émetteur-récepteur engendre un grand nombre de trajets de propagation tandis qu'un second n'engendre qu'un petit nombre de trajets, il peut être préférable de viser une consigne de puissance plus élevée pour le premier émetteur-récepteur que pour le second. Sinon, il peut se produire que le gain en macrodiversité apporté par l'adjonction du second émetteur-récepteur dans l'ensemble actif soit négatif.

La cadence des chips étant fixée, un canal physique à débit élevé a un facteur d'étalement faible et une durée de symbole courte. Si la réponse impulsionnelle de ce canal comporte des trajets relativement écartés dans le temps, il en résulte de l'interférence Inter-symboles qui dégrade les performances du récepteur ou requiert un égaliseur de canal qui accroît nettement sa complexité. Il peut donc être avantageux de dédoubler un tel canal en deux canaux de facteur d'étalement double. Cependant, la multiplication des canaux de facteur d'étalement élevé n'est pas toujours souhaitable, de sorte qu'il vaut mieux y renoncer lorsque le canal n'engendre quasiment pas d'interférence inter-symboles.

Un but de la présente invention est d'optimiser l'utilisation des ressources dans un réseau radio à étalement de spectre.

L'invention propose ainsi un procédé de contrôle de ressources radio affectées à une communication entre un terminal mobile et une infrastructure de réseau radio cellulaire à étalement de spectre, l'infrastructure comprenant au moins un contrôleur de réseau radio et des émetteurs-récepteurs fixes desservant des cellules respectives. Ce procédé est conforme à la revendication 1.

Le traitement des messages de compte rendu au contrôleur de réseau radio peut comprendre un contrôle de macrodiversité, c'est-à-dire la détermination d'un ensemble actif d'émetteurs-récepteurs fixes relativement au terminal et une activation de lien radio entre le terminal mobile et chaque émetteur-récepteur fixe de l'ensemble actif.

De ce fait, l'algorithme de gestion de l'ensemble actif et de contrôle de handover exécuté dans le contrôleur de réseau radio ne se borne pas à examiner les énergies globales de réception sur les différents canaux de propagation comme dans les systèmes habituels. Il dispose également d'informations sur les répartitions énergétiques dans les profils de propagation, qui lui permettent de mieux apprécier le besoin d'ajouter ou d'enlever des émetteurs-récepteurs fixes dans l'ensemble actif.

Des considérations analogues peuvent s'appliquer à d'autres procédures de contrôle des ressources radio, notamment à l'algorithme de gestion des puissances d'émission des émetteurs-récepteurs de l'ensemble actif et de contrôle de puissance exécuté dans le contrôleur de réseau radio. Dans ce cas, les profils de propagation permettent au contrôleur de réseau radio de mieux apprécier la nécessité d'augmenter ou de diminuer la puissance d'émission des émetteurs-récepteurs de l'ensemble actif.

Les données dépendant de la répartition énergétique dans le profil de propagation et transmises au contrôleur de réseau radio peuvent notamment comprendre un nombre de trajets de propagation détectés entre le terminal mobile et l'émetteur-récepteur fixe avec une énergie de réception supérieure à un seuil. Par exemple, si un canal de propagation présente à lui seul un assez grand nombre de trajets énergétiques, le contrôleur pourra inhiber l'adjonction d'émetteurs-récepteurs supplémentaires dans l'ensemble actif ou du moins rendre plus sévères les conditions d'adjonction. Dans un autre exemple, si deux émetteurs-récepteurs font partie de l'ensemble actif et si chacun d'entre eux possède un trajet énergétique prédominant avec une atténuation ("pathloss") comparable, le contrôleur pourra équilibrer leurs puissances d'émission de façon à ce qu'elles soient équivalentes.

De même, les données dépendant de la répartition énergétique dans le profil de propagation peuvent donner une indication sur la répartition des trajets énergétiques dans le temps. Dans ce cas, un autre exemple de traitement des messages de compte-rendu au contrôleur radio est d'obtenir le décalage temporel entre les trajets principaux, c'est-à-dire les trajets les plus énergétiques, sur le canal de propagation et de le comparer à la durée d'un symbole sur le ou les canaux physiques impliqués dans la communication entre le terminal mobile et un émetteur-récepteur fixe. Le contrôleur radio peut alors décider de configurer le terminal mobile et l'émetteur-récepteur fixe pour qu'ils utilisent d'autres canaux physiques avec un format plus adapté à la situation, en vue d'établir un bon compromis entre les éventuelles interférences inter-symboles et un débit maximum pour la communication.

Les données dépendant de la répartition énergétique dans le profil de propagation et transmises au contrôleur de réseau radio peuvent aussi comprendre les valeurs des énergies de réception respectivement associées à un ou plusieurs trajets de propagation détectés entre le terminal mobile et l'émetteur-récepteur fixe.

Les mesures des paramètres de canaux de propagation, ou du moins certaines d'entre elles, peuvent être des mesures descendantes effectuées par le terminal mobile sur des signaux pilotes respectivement émis par les émetteurs-récepteurs fixes et formés avec des codes d'étalement déterminés. Certaines de ces mesures peuvent aussi être des mesures montantes effectuées par les émetteurs-récepteurs fixes sur un signal pilote inclus dans des signaux émis par le terminal mobile sur un canal dédié.

L'invention propose également des contrôleurs de réseau radio, des terminaux mobiles et des stations de base adaptés à la mise en oeuvre du procédé ci-dessus.

Un contrôleur de réseau radio selon l'invention est conforme à la revendication 22.

WO 99/13675 enseigne une gestion d'un ensemble actif de stations de base à partir de mesures effectuées par un terminal mobile sur des signaux descendants. Aucune autre exploitation des mesures n'est envisagée dans cette publication.

D'autres particularités et avantages de la présente invention apparaîtront dans la description ci-après d'exemples de réalisation non limitatifs, en référence aux dessins annexés, dans lesquels :

- la figure 1 est un schéma d'un réseau UMTS;
- la figure 2 est un diagramme montrant l'organisation en couchée de protocoles de communication employés sur l'interface radio du réseau UMTS ;
- la figure 3 est un schéma synoptique de la partie émission d'un émetteur-récepteur radio d'une station de base UMTS ;
- la figure 4 est un schéma synoptique de la partie émission d'un terminal mobile UMTS ;
- la figure 5 est un schéma synoptique d'un récepteur d'une station UMTS:
- la figure 6 est un schéma synoptique d'un contrôleur de réseau radio UMTS ; et
- les figures 7 et 8 sont des organigrammes d'algorithmes de détermination d'ensemble actif pouvant être exécutés dans un contrôleur de réseau radio selon la figure 6.

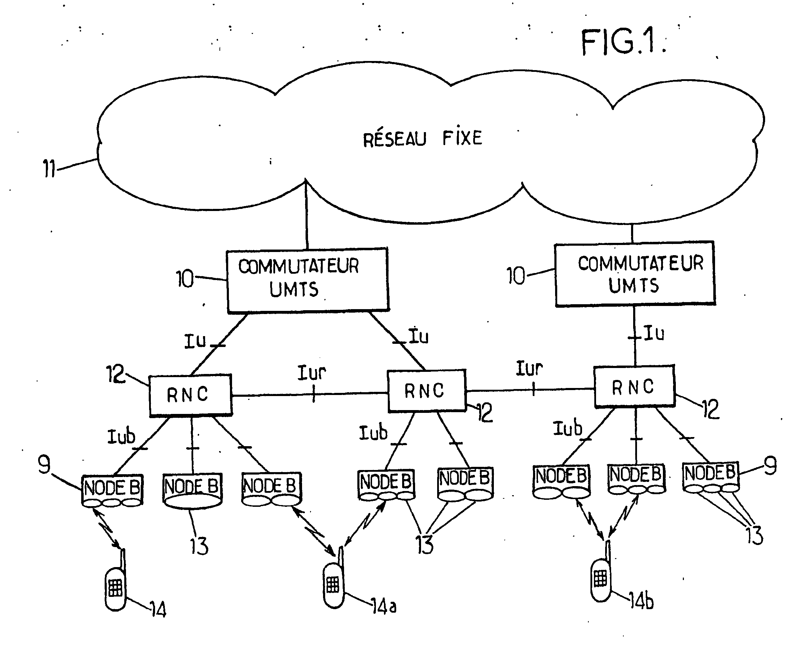

L'invention est décrite ci-après dans son application à un réseau UMTS, dont la figure 1 montre l'architecture.

Les commutateurs du service mobile 10, appartenant un coeur de réseau (CN, "Core Network"), sont reliés d'une part à un ou plusieurs réseaux fixes 11 et d'autre part, au moyen d'une interface dite *Iu*, à des équipements de contrôle 12, ou RNC ("Radio Network Controller"). Chaque RNC 12 est relié à une ou plusieurs stations de base 9 au moyen d'une interface dite *Iub*. Les stations de base 9, réparties sur le territoire de couverture du réseau, sont capables de communiquer par radio avec les terminaux mobiles 14, 14a, 14b appelés UE ("User Equipinent"). Les stations de base 9, aussi appelées « node B », peuvent desservir chacune une ou plusieurs cellules au moyen d'émetteurs-récepteurs respectifs 13. Certains RNC 12 peuvent en outre communiquer entre eux au moyen d'une interface dite *Iur*. Les RNC et les stations de base forment un réseau d'accès appelé UTRAN ("UMTS Terrestrial Radio Access Network").

L'UTRAN comporte des éléments des couches 1 et 2 du modèle ISO en vue de fournir les liaisons requises sur l'interface radio (appelée *Uu*), et un étage 15A de contrôle des ressources radio (RRC, "Radio Resource Control") appartenant à la couche 3, ainsi qu'il est décrit dans la spécification technique 3G TS 25.301, "Radio interface Protocol", version 3.4.0 publiée en mars 2000 par le 3GPP (3rd Generation Partnership Project). Vu des couches supérieures, l'UTRAN agit simplement comme relais entre l'UE et le CN.

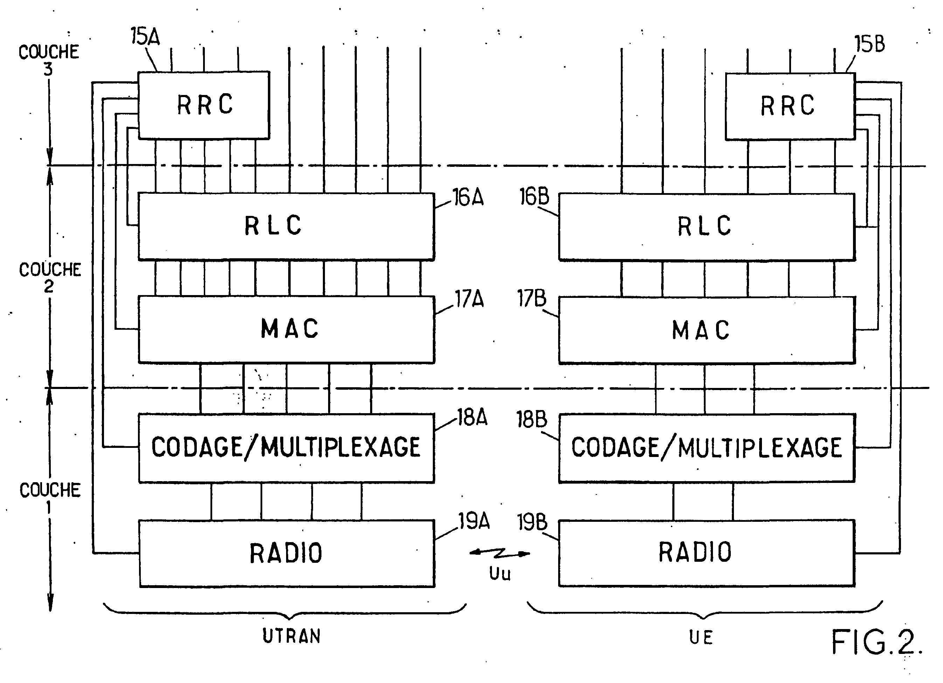

La figure 2 montre les étages RRC 15A, 15B et les étages des couches inférieures qui appartiennent à l'UTRAN et à un UE. De chaque côté, la couche 2 est subdivisée en un étage 16A, 16B de contrôle de liaison radio (RLC, "Radio Link Control") et un étage 17A, 17B de contrôle d'accès au médium (MAC, "Medium Access Control"). La couche 1 comprend un étage 18A, 18B de codage et de multiplexage. Un étage 19A, 19B radio assure l'émission des signaux radio à partir des trains de symboles fournis par l'étage 18A, 18B, et la réception des signaux dans l'autre sens.

Il existe différentes façons d'adapter l'architecture de protocoles selon la figure 2 à l'architecture matérielle de l'UTRAN selon la figure 1, et en général différentes organisations peuvent être adoptées selon les types de canaux (voir section 11.2 de la spécification technique 3G TS 25.401, "UTRAN Overall Description", version 3.1.0 publiée en janvier 2000 par le 3GPP). Les étages RRC, RLC et MAC se trouvent dans le RNC 12. La couche 1 se trouve par exemple dans le node B 9. Une partie de cette couche peut toutefois se trouver dans le RNC 12.

Lorsque plusieurs RNC sont impliqués dans une communication avec un UE, il y a généralement un RNC de desserte appelé SRNC ("Serving RNC"), où se trouvent les modules relevant de la couche 2 (RLC et MAC), et au moins un RNC relais appelé DRNC ("Drift RNC") auquel est relié une station de base 9 avec laquelle l'UE est en liaison radio. Des protocoles appropriés assurent les échanges entre ces RNC sur l'interface *Iur*, par exemple ATM ("Asynchronous Transfer Mode") et AAL2 ("ATM Adaptation Layer No. 2"). Ces mêmes protocoles peuvent également être employés sur l'interface Iub pour les échanges entre un node B et son RNC.

Les couches 1 et 2 sont chacune contrôlées par la sous-couche RRC, dont les caractéristiques sont décrites dans la spécification technique TS 25.331, "RRC Protocol Specification", version 4.1.0 publiée en juin 2001 par le 3GPP. L'étage RRC 15A, 15B supervise l'interface radio. Il traite en outre des flux à transmettre à la station distante selon un "plan de contrôle", par opposition au "plan d'utilisateur" qui correspond au traitement des données d'utilisateur issues de la couche 3.

L'UMTS utilise la technique CDMA d'étalement de spectre, c'est-à-dire que les symboles transmis sont multipliés par des codes d'étalement constitués d'échantillons appelés "chips" dont la cadence (3,84 Mchip/s dans le cas de l'UMTS) est supérieure à celle des symboles transmis. Les codes d'étalement distinguent différents canaux physiques (PhCH) qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés.

Pour l'UMTS en mode FDD ("Frequency Division Duplex") sur la liaison descendante, un code de brouillage ("scrambling code") est alloué à chaque émetteur-récepteur 13 de chaque station de base 9, et différents canaux physiques utilisés par cet émetteur-récepteur sont distingués par des codes de canal ("channelization codes") mutuellement orthogonaux. L'émetteur-récepteur 13 peut aussi utiliser plusieurs codes de brouillage mutuellement orthogonaux, l'un d'entre eux étant un code de brouillage primaire. Sur la liaison montante, l'émetteur-récepteur 13 utilise le code de brouillage pour séparer les UE émetteurs, et éventuellement le code de canal pour séparer les canaux physiques, issus d'un même UE. Pour chaque PhCH, le code d'étalement global est le produit du code de canal et du code de brouillage. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

Les différents canaux physiques sont organisés en trames de 10 ms qui se succèdent sur la fréquence porteuse utilisée. Chaque trame est subdivisée en 15 tranches temporelles ("timeslots") de 666 $\mu$s. Chaque tranche peut porter les contributions superposées d'un ou plusieurs canaux physiques, comprenant des canaux communs et des canaux dédiés DPCH ("Dedicated Physical Channel").

Sur la liaison descendante, l'un des canaux communs est un canal pilote appelé CPICH ("Common Pilot Channel"). Ce canal porte un signal pilote, ou signal de balise, formé à partir d'une séquence de symboles prédéterminée (voir spécification technique 3G TS 25.211, "Physical channels and mapping of transport channels onto physical channels (FDD)", version 3.3.0 publiée en juin 2000 par le 3GPP). Ce signal est émis par l'émetteur-récepteur 13 sur le code de brouillage primaire de la cellule, avec un code de canal déterminé.

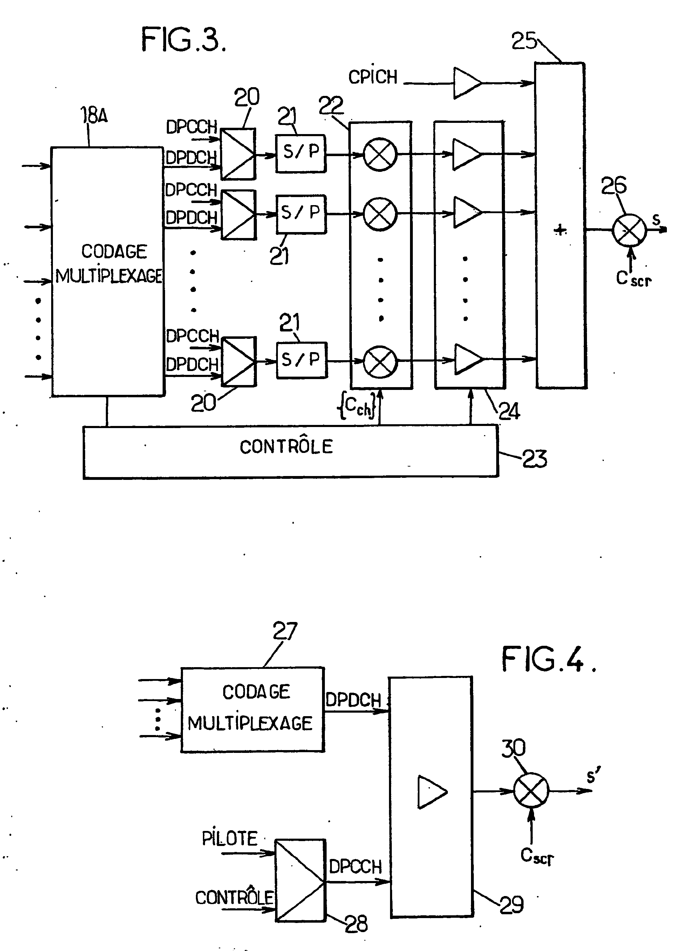

La figure 3 illustre schématiquement la partie émission d'un émetteur-récepteur fixe 13 d'une station de base UMTS, desservant une cellule au moyen d'un code de brouillage $c_{scr}$. La couche 1 peut multiplexer plusieurs canaux de transport (TrCH) issus de la sous-couche MAC sur un ou plusieurs PhCH. Le module 18A reçoit les flux de données des TrCH descendants, issus du RNC, et leur applique les opérations de codage et de multiplexage requises pour former la partie données (DPDCH) des DPCH à émettre. Ces fonctions de codage et de multiplexage sont décrites en détail dans la spécification technique 3G TS 25.212, "Multiplexing and channel coding (FDD)", version 3.3.0 publiée en juin 2000 par le 3GPP.

Cette partie données DPDCH est multiplexée dans le temps, au sein de chaque tranche temporelle de 666 ms avec une partie contrôle (DPCCH) comportant des informations de contrôle et des symboles pilotes prédéterminés, comme schématisé sur la figure 3 par les multiplexeurs 20 qui forment les flux binaires des DPCH. Sur chaque canal, un convertisseur série/parallèle 21 forme un signal numérique complexe dont la partie réelle est constituée par les bits de rang pair du flux et la partie imaginaire par les bits de rang impair. Le module 22 applique à ces signaux complexes leurs codes de canal respectifs $c_{ch}$, qui sont alloués par une unité de contrôle 23. Le module 24 pondère les signaux qui en résultent conformément aux puissances d'émission respectives des canaux physiques, déterminées par un processus de contrôle de puissance.

Les signaux complexes des différents canaux sont ensuite sommés par l'additionneur 25 avant d'être multipliés par le code de brouillage $c_{scr}$ de la cellule au moyen du module 26. L'additionneur 25 reçoit aussi la contribution du CPICH, qui n'est pas multipliée par un code de canal puisque le code de canal du CPICH est constant et égal à 1 (spécification technique 3G TS 25.213, "Spreading and modulation (FDD)", version 3.2.0 publiée en mars 2000 par le 3GPP). Le signal complexe en bande de base s délivré par le module 26 est soumis à un filtre de mise en forme et converti en analogique avant de moduler la fréquence porteuse en QPSK ("Quadrature Phase Shift Keying"), et d'être amplifié et émis par la station de base.

Les différentes ressources d'émission de l'émetteur-récepteur 13 sont allouées aux canaux par l'unité 23 sous le contrôle de l'étage RRC 15A situé dans le RNC. Les messages de contrôle correspondants sont transmis au moyen d'un protocole applicatif de commande des émetteurs-récepteurs, appelé NBAP ("Node B Application Protocol", voir spécification technique 3G TS 25.433, version 4.1.0, "UTRAN lub Interface NBAP Signalling", publiée en juin 2001 par le 3GPP).

La figure 4 illustre schématiquement la partie émission d'un UE. On suppose ici que cet UE émet sur un seul canal physique. Le module 27 assure le codage et éventuellement le multiplexage des TrCH correspondant à un canal physique. Ceci forme un signal réel (DPDCH) qui sera transmis sur une voie I. Parallèlement, des informations de contrôle ainsi que des symboles pilote sont assemblés par un module 28 pour former un signal réel (DPCCH) qui sera transmis sur une voie Q. Les signaux numériques des voies I et Q forment les parties réelle et imaginaire d'un signal complexe dont la puissance d'émission est ajustée par un module 29. Le signal résultant est modulé par le code d'étalement du canal constitué par un code de brouillage $c_{scr}$, comme représenté par le multiplieur 30. Le signal complexe en bande de base s' ainsi obtenu ensuite filtré, converti en analogique avant de moduler la fréquence porteuse en QPSK.

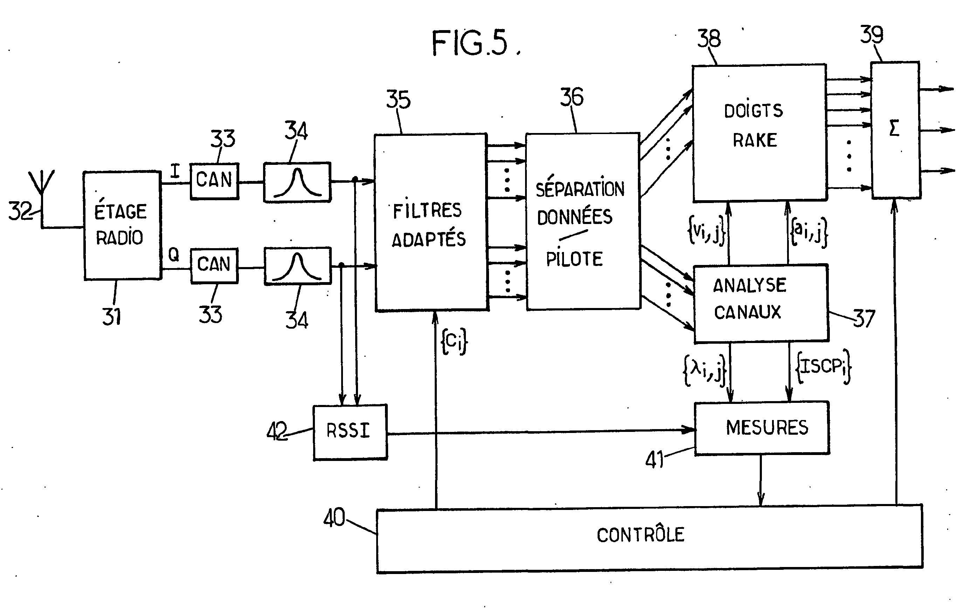

La figure 5 est un schéma synoptique d'un récepteur CDMA pouvant se trouver dans l'UE pour la liaison descendante, ou dans le node B pour la liaison montante. Ce récepteur comporte un étage radio 31 qui effectue les traitements analogiques requis sur le signal radio capté par une antenne 32. L'étage radio 31 délivre un signal analogique complexe dont les parties réelles et imaginaire sont numérisées par les convertisseurs analogiques-numérique 33 sur des voies de traitement respectives I et Q. Sur chaque voie, un filtre 34 adapté à la mise en forme des impulsions par l'émetteur produit un signal numérique à la cadence des chips des codes d'étalement.

Ces signaux numériques sont soumis à une batterie de filtres adaptés 35. Ces filtres 35 sont adaptés aux codes d'étalement $c_i$ des canaux à prendre en considération. Ces codes d'étalement $c_i$ (produits d'un code de brouillage et d'un éventuel code de canal) sont fournis aux filtres adaptés 35 par un module de contrôle 40 qui gère notamment l'allocation des ressources du récepteur. Du côté du node B, le module de contrôle 40 est supervisé par l'étage RRC 15A du RNC à travers le protocole NBAP. Du côté de l'UE, le module de contrôle 40 est supervisé par l'étage RRC 15B.

Pour N canaux physiques (codes d'étalement) pris en compte, les filtres adaptés 35 délivrent N signaux réels sur la voie I et N signaux réels sur la voie Q, qui sont fournis à un module 36 de séparation entre les données et les signaux pilotes. Pour les liaisons descendantes, la séparation consiste à extraire les portions des tranches temporelles contenant les signaux pilotes complexes émis par le node B pour les fournir au module 37 d'analyse des canaux, les données correspondantes étant adressées aux doigts 38 du récepteur rake. Dans le cas des liaisons montantes, la séparation opérée par le module 36 consiste à extraire les signaux pilotes réels de la voie Q relative à chaque canal pour les fournir au module d'analyse 37.

Pour chaque canal physique, dénoté par un indice entier i, le module d'analyse 37 identifie un certain nombre de trajets de propagation, dénotés par un indice j, sur la base de la portion du signal de sortie du filtre adapté 35 correspondant aux symboles pilotes, qui constitue un échantillonnage de la réponse impulsionnelle du canal.

Il existe différentes façons possibles de représenter les trajets de propagation pour le récepteur rake. Une méthode consiste à rechercher les maxima de la réponse impulsionnelle du canal échantillonnée en sortie du filtre adapté 35, moyennée sur une période de l'ordre de la centaine de millisecondes. Chaque trajet de propagation est alors représenté par un retard $t_{i,j}$ correspondant à l'un des maxima, d'amplitude instantanée $a_{i,j}$. Dans ce cas, le traitement effectué dans chaque doigt 38 du récepteur rake, alloué au trajet j du canal i, consiste à échantillonner le signal reçu sur le canal i avec le retard $t_{i,j}$ et à multiplier le résultat par $a_{i,j}^*$. Les trajets sélectionnés sont ceux pour lesquels les énergies de réception sont les plus grandes, l'énergie de réception suivant un trajet j d'un canal i étant égale à la moyenne de $|a_{i,j}|^2$.

Dans une autre représentation possible (voir WO01/41382), chaque trajet de propagation d'un canal i est représenté par un vecteur propre $v_{i,j}$ de la matrice d'autocorrélation du vecteur de réponse impulsionnelle fourni par le filtre adapté 35. Dans le traitement effectué dans le doigt 38 du récepteur rake, l'échantillonnage avec le retard $t_{i,j}$ est alors remplacé par le produit scalaire du vecteur de sortie du filtre adapté 35 par le vecteur propre $v_{i,j}$. Pour estimer les vecteurs propres $v_{i,j}$, le module d'analyse 37 effectue une diagonalisation de la matrice d'autocorrélation, qui fournit également les valeurs propres associées $\lambda_{i,j}$. La valeur propre $\lambda_{i,j}$, égale à l'espérance mathématique de $|a_{i,j}|^2$, représente l'énergie de réception du signal sur le trajet j du canal i.

Le module de combinaison 39 du récepteur rake reçoit les contributions des doigts 38 et, pour chaque canal i, calcule la somme des contributions respectives des trajets retenus j, indiqués par le module de contrôle 40. Le résultat est l'estimation locale des symboles d'information transmis sur le canal i.

Dans le cas d'un UE recevant des signaux descendants en mode de macrodiversité, c'est-à-dire depuis plusieurs émetteurs-récepteurs 13 utilisant des codes d'étalement différents, le module 39 peut également additionner les contributions des canaux de propagation correspondants afin d'obtenir le gain en diversité. Les estimations combinées qui en résultent sont alors soumises à l'étage de décodage et de démultiplexage (non représenté sur la figure 5).

Dans le cas d'une station de base 9 recevant sur plusieurs émetteurs-récepteurs 13 des signaux montants issus d'un même terminal mobile en mode de macrodiversité, les estimations locales délivrées par les modules de combinaison respectifs 39 de ces émetteurs-récepteurs 13 sont également combinées afin d'obtenir le gain en diversité.

Dans le cas d'une macrodiversité montante entre plusieurs stations de base 9 recevant des signaux issus d'un même terminal mobile, les estimations locales délivrées par les modules de combinaison respectifs 39 des émetteurs-récepteurs 13 sont soumises à l'étage de décodage et de démultiplexage (non représenté sur la figure 5) pour obtenir les symboles estimés du ou des TrCH concernés. Ces symboles sont transmis au SRNC par l'intermédiaire de l'interface *Iub* (*Iur*) dans lequel ils sont combinés afin d'obtenir le gain en diversité.

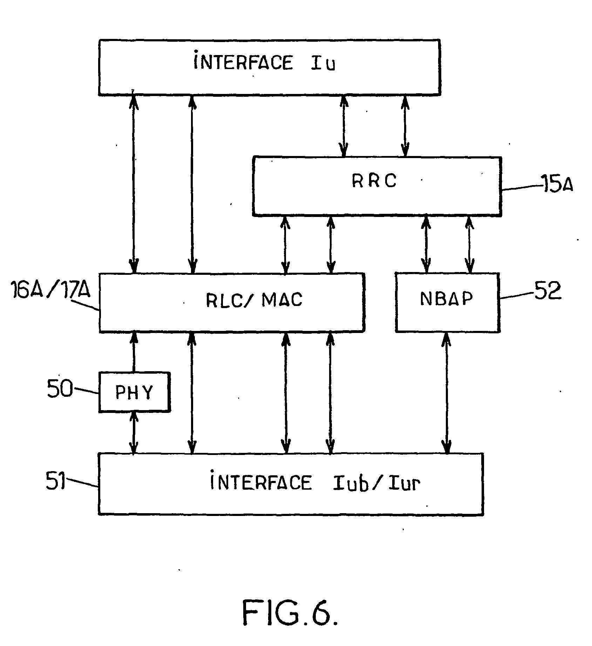

Le module de combinaison correspondant du RNC 12 est désigné par la référence 50 sur la figure 6. Ce module récupère sur l'interface *Iub* et/ou *Iur* 51 les symboles du TrCH issus des différentes stations de base et les fournit l'étage MAC 17A après combinaison. Dans le sens descendant, ce module 50 appartenant à la couche physique se charge de diffuser les flux des TrCH issus de l'étage MAC 17A vers les stations de base concernées.

La figure 6 illustre en outre schématiquement une instance 52 du protocole NBAP exécutée au niveau du RNC 12 pour contrôler une station de base distante. Le dialogue entre l'étage RRC 15A du RNC et celui 15B d'un UE s'effectue au moyen d'une "connexion RRC" gérée comme décrit dans la section 8.1 de la spécification technique 3G TS 25.331 précitée. Les procédures du protocole RRC comprennent des procédures de mesure décrites dans la section 8.4 de la spécification technique 3G TS 25.331, qui servent notamment à la mise à jour de l'ensemble actif pour les UE en macrodiversité (ou SHO) ainsi qu'à l'ajustement des puissances d'émission des émetteurs-récepteurs de l'ensemble actif. Les mesures souhaitées par le RNC sont demandées aux UE dans des messages "MEASUREMENT CONTROL", dans lesquels sont également indiqués les modes de compte rendu, par exemple avec une périodicité spécifiée ou en réponse à certains événements. Les mesures spécifiées par le RNC sont alors effectuées par l'UE qui les remonte sur la connexion RRC dans des messages "MEASUREMENT REPORT" (voir sections 10.2.17 et 10.2.19 de la spécification technique 3G TS 25.331). Ces messages "MEASUREMENT CONTROL" et "MEASUREMENT REPORT' sont relayés de façon transparente par les émetteurs-récepteurs 13 des stations de base.

Plusieurs algorithmes, non normalisés peuvent être utilisés par le SRNC pour déterminer les émetteurs-récepteurs 13 de l'ensemble actif. Des exemples en seront examinés plus loin.

Dans certains cas, ces algorithmes de détermination de l'ensemble actif peuvent prendre en compte des mesures montantes, réalisées par les émetteurs-récepteurs 13 des stations de base et remontées conformément aux procédures NBAP décrites dans les sections 8.3.8 à 8.3.11 de la spécification technique 3G TS 25.433 précitée. Le RNC indique au node B les mesures dont il a besoin dans un message "DEDICATED MEASUREMENT INITIATION REQUEST", et le node B les remonte dans un message de compte rendu "DEDICATED MEASUREMENT REPORT" (voir sections 9.1.52 et 9.1.55 de la spécification technique 3G TS 25.433).

Les modifications de l'ensemble actif sont notifiées à l'UE (module de contrôle 40 du récepteur) au moyen des procédures de mise à jour de l'ensemble actif en SHO du protocole RRC, décrites dans la section 8.3.4 de la spécification technique 3G TS 25.331 (message "ACTIVE SET UPDATE" de la section 10.2.1).

Ces modifications donnent également lieu à l'envoi de signalisation du RNC aux stations de base 9 au moyen des procédures d'établissement, d'addition, de reconfiguration et de suppression de liens radio du protocole NBAP, décrites dans la section 8 de la spécification technique 3G TS 25.433.

Les mesures prises en considération par le RNC pour contrôler les liens radio en SHO comprennent des mesures de puissance effectuées sur les signaux ou canaux pilotes, obtenues par un module de mesure 41 représenté sur la figure 5. Diverses mesures que doivent pouvoir faire les terminaux mobiles et les stations de base sont listées dans la spécification technique 3G TS 25.215, "Physical layer - Measurements (FDD)", version 3.3.0 publiée en juin 2000 par le 3GPP. Les mesures obtenues par le module 41 sont transmises au RNC par l'intermédiaire du module de contrôle 40 et de la connexion RRC (mesure de l'UE) ou du protocole NBAP (mesure du node B).

Pour un canal i donné, la somme des valeurs propres $\lambda_{i,j}$, déterminées par le module d'analyse 37 pour les p trajets de propagation pris en considération ($1 \leq j \leq p$), représente l'énergie globale reçue sur le canal, ramenée à la durée d'un symbole. Cette énergie est appelée RSCP dans la norme ("Received Signal Code Power"). Le module d'analyse 37 détermine également pour chaque canal i la puissance résiduelle du bruit après prise en compte des p trajets. Cette puissance résiduelle est appelée ISCP dans la norme ("Interference Signal Code Power"). La quantité (RSCP/ISCP)$\times$(SF/2) représente le rapport signal-sur-interféreurs (SIR, "Signal-to-Interferer Ratio") pour un canal descendant, SF désignant le facteur d'étalement du canal. Le SIR est égal à (RSCP/ISCP)$\times$SF pour un canal montant.

Le SIR, évalué sur les symboles pilotes transmis sur un canal dédié, est une mesure que le RNC peut demander à l'UE ou au node B, et il peut éventuellement en tenir compte dans la gestion de l'ensemble actif.

Le récepteur radio est en outre capable de mesurer la puissance reçue dans la bande passante des signaux autour d'une porteuse UMTS. Cette puissance, mesurée par un module 42 en amont des filtres adaptés 35, est indiquée par la quantité appelée RSSI ("Received Signal Strength Indicator").

Les UE en communication surveillent en parallèle les énergies reçues sur les canaux CPICH des cellules appartenant à un ensemble surveillé ("monitored set") comprenant l'ensemble actif et un certain nombre de cellules avoisinantes. Ces mesures d'énergie sont généralement remontées au RNC dans les messages "MEASUREMENT REPORT". Les grandeurs remontées peuvent être les énergies absolues (CPICH_RSCP) ou, plus couramment, normalisées par rapport à l'énergie du signal reçu (CPICH_Ec/N0 = CPICH_RSCP / RSSI).

Pour permettre une prise en compte plus fine des profils de propagation par les algorithmes de détermination de l'ensemble actif et de contrôle de puissance pour cet ensemble actif, il est avantageux de transmettre en outre au RNC des données dépendant de la répartition énergétique dans le profil de propagation. Pour cela, des choix de valeur particuliers sont prévus dans les éléments d'information (IE) "INTRA-FREQUENCY MEASUREMENT" et "MEASURED RESULTS" des messages précités "MEASUREMENT CONTROL" et "MEASUREMENT REPORT" du protocole RRC pour les mesures descendantes, et dans les IE "DEDICATED MEASUREMENT TYPE" et "DEDICATED MEASUREMENT VALUE" des messages précités "DEDICATED MEASUREMENT INITIATION REQUEST" et "DEDICATED MEASUREMENT REPORT" du protocole NBAP pour les mesures montantes.

Le module d'analyse 37 du récepteur calcule

les valeurs propres $\lambda_{i,j} = E\left(\left|a_{i,j}\right|^2\right)$, qui sont sommées sur l'indice de trajet j pour obtenir le RSCP du canal i. Il dispose donc d'information sur la répartition énergétique dans le profil de propagation relatif au canal i.

Le module de mesure 41 peut récupérer les p valeurs $\lambda_{i,j}$ et les transmettre au RNC 12. Dans une réalisation typique, les canaux physiques concernés seront les CPICH issus des émetteurs-récepteurs de l'ensemble surveillé, les mesures étant remontées par l'UE. Les mesures remontées peuvent être les mesures absolues $\lambda_{i,j}$, homogènes aux CPICH_RSCP, ou des mesures normalisées $\mu_{i,j} = \lambda_{i,j}$ / RSSI, homogènes aux CPICH_Ec/N0. Le module de mesure 41 peut également, après avoir identifié le trajet principal, c'est-à-dire celui dont l'énergie est maximale $\lambda_{i\,max}$, transmettre les valeurs des autres trajets relativement à ce trajet principal, soit $\rho_{i,j} = \lambda_{i,j}$ / $\lambda_{i\,max}$.

Toutefois, il est à noter que les mesures remontées peuvent aussi être de type SIR mono-trajet, c'est-à-dire proportionnelles à $\lambda_{i,j}$ / $ISCP_i$, et évaluées sur les symboles pilotes inclus dans les canaux dédiés. D'autre part, les mesures dépendant de la répartition énergétique dans le profil de propagation peuvent aussi être des mesures effectuées par le Node B sur les symboles pilotes transmis par l'UE sur la voie Q.

En variante, le module de mesure 41 peut ne transmettre que les valeurs $\lambda_{i,j}$, $\mu_{i,j}$ ou $\rho_{i,j}$ qui dépassent un seuil prédéfini. Ce seuil est avantageusement un paramètre réglable selon une commande de configuration reçue du RNC.

Un autre possibilité est que le récepteur indique simplement au RNC combien de trajets j donnent lieu à une énergie de réception $\lambda_{i,j}$, $\mu_{i,j}$ ou $\rho_{i,j}$ supérieure au seuil. Ce nombre $\alpha_i$, qui est une mesure de la diversité multi-trajets procurée par un seul émetteur-récepteur 13 pour l'UE considéré, peut alors être pris en compte par l'algorithme de détermination et de contrôle de puissance de l'ensemble actif.

Il est également possible pour le récepteur de remonter au RNC une indication de position temporelle relative pour les différents trajets identifiés sur un canal i. Il peut s'agir par exemple du retard $t_{i,j}$ de chaque trajet j, ce qui donne une vision complète de la répartition des trajets sur une période de temps. Il peut aussi s'agir de la différence entre les temps de détection de deux trajets donnés au niveau du récepteur. A nouveau, les deux trajets pris en compte pour le calcul de la différence de temps à remonter au RNC peuvent être choisis suivant différents critères : trajets avec une énergie de réception $\lambda_{i,j}$, $\mu_{i,j}$ ou $\rho_{i,j}$ supérieure à un seuil (typiquement le récepteur remontera au RNC l'écart temporel maximum entre deux tels trajets), trajets de plus grande énergie parmi l'ensemble des trajets détectés sur une période fixée, tout couple de trajets consécutifs, le premier trajet détecté (servant de référence temporelle) et un second trajet quelconque...

Dans le cas d'une cellule pour laquelle la station de base 9 reçoit sur plusieurs antennes d'indices k (k = 1, 2, ...) des signaux montants issus d'un même terminal mobile, en mode de diversité spatiale, le module de mesure 41 peut transmettre au RNC 12 les valeurs correspondant à des énergies de réception $\lambda_{i,j}$ calculées en faisant la somme des valeurs $\lambda_{i,j;k}$ obtenues, de la manière décrite précédemment, à partir des signaux respectivement captés par les différentes antennes. Cette combinaison est facilitée du fait que les retards identifiant un trajet j reçu par les différentes antennes sont sensiblement identiques, compte tenu de la faible distance séparant généralement ces antennes.

Pour ne donner qu'un exemple parmi ceux qui ont été décrits précédemment, la valeur $\rho_{i,j} = \lambda_{i,j}$ / $\lambda_{i\,max}$ transmise au RNC 12 peut alors être remplacée par la valeur $\rho_{i,j} = (\lambda_{i,j;1} + \lambda_{i,j\,;2})$ / $(\lambda_{i;1} + \lambda_{i;2})_{max}$, dans un cas de diversité spatiale avec deux antennes de réception d'indices k = 1 et k = 2.

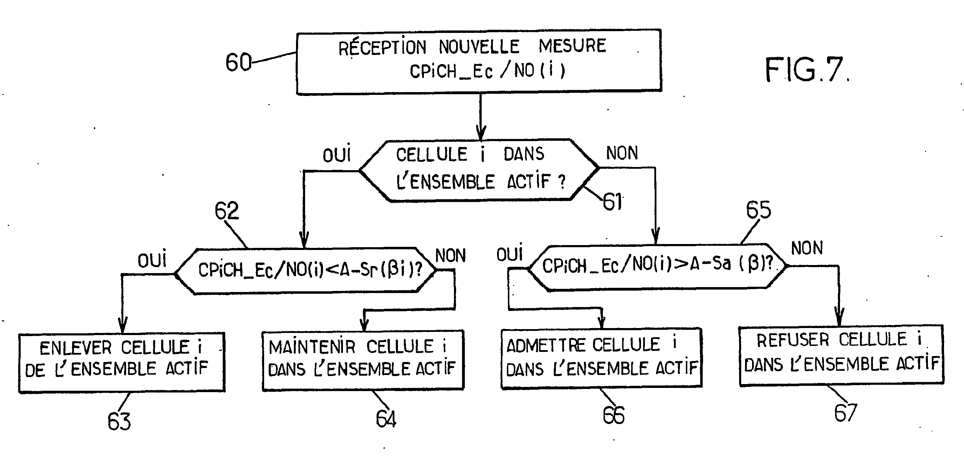

La figure 7 illustre un exemple simple de procédure de détermination de l'ensemble actif par l'étage RRC 15A dans le RNC 12. Cette procédure est exécutée pour un UE donné lorsque le RNC, disposant de la mesure CPICH_Ec/N0 = A relative à une cellule de référence de l'ensemble actif pour laquelle le CPICH_Ec/N0 ou le SIR est maximal, reçoit une nouvelle valeur CPICH_Ec/N0(i) mesurée par l'UE en provenance d'un émetteur-récepteur i de l'ensemble surveillé (étape 60).

Si l'émetteur-récepteur i se trouve déjà dans l'ensemble actif EA (test 61), le RNC examine un critère de suppression de l'émetteur-récepteur de l'ensemble actif relatif à l'UE. Ce critère de suppression 62 porte sur l'énergie globale de réception selon le canal de propagation entre le terminal mobile et l'émetteur-récepteur i, exprimée par la quantité CPICH_Ec/N0(i), et il a une sévérité décroissante avec le nombre $\beta_i$ de trajets de propagation détectés par l'UE depuis les autres émetteurs-récepteurs i' de l'ensemble actif EA avec une énergie de réception supérieure à un seuil $(\beta_i = \sum_{\substack{i' \in EA \\ i' \neq i}} \alpha_{i'})$. Ainsi, la cellule i aura plus de chances d'être enlevée de l'ensemble actif quand le nombre de trajets énergétiques déjà procurés par les autres canaux de propagation de l'ensemble actif est relativement élevé. Dans l'exemple de la figure 7, l'examen du critère 62 consiste à comparer la différence A - CPICH_Ec/N0(i) à un seuil de rejet positif Sr qui est une fonction décroissante du nombre $\beta_i$. La cellule i est enlevée de l'ensemble actif (étape 63) quand A - CPICH_Ec/N0(i) > Sr et maintenue sinon (étape 64).

Si l'émetteur-récepteur i ne se trouve pas dans l'ensemble actif EA (test 61), le RNC examine un critère d'admission de l'émetteur-récepteur dans l'ensemble actif relatif à l'UE. Ce critère d'admission 65 porte aussi sur la quantité CPICH_Ec/N0(i), et il a une sévérité croissante avec le nombre β de trajets de propagation détectés par l'UE depuis les émetteurs-récepteurs i' de l'ensemble actif EA avec une énergie de réception supérieure à un seuil $(\beta = \sum_{i' \in EA} \alpha_{i'})$. Ainsi, la cellule i aura moins de chances d'être admise dans l'ensemble actif quand le nombre de trajets énergétiques déjà procurés par les canaux de propagation de l'ensemble actif est relativement élevé. Dans l'exemple de la figure 7, l'examen du critère 65 consiste à comparer la différence A - CPICH_Ec/N0(i) à un seuil d'admission positif Sa qui est une fonction croissante du nombre β. La cellule i est enlevée de l'ensemble actif (étape 66) quand A - CPICH_Ec/N0(i) < Sa et maintenue sinon (étape 67).

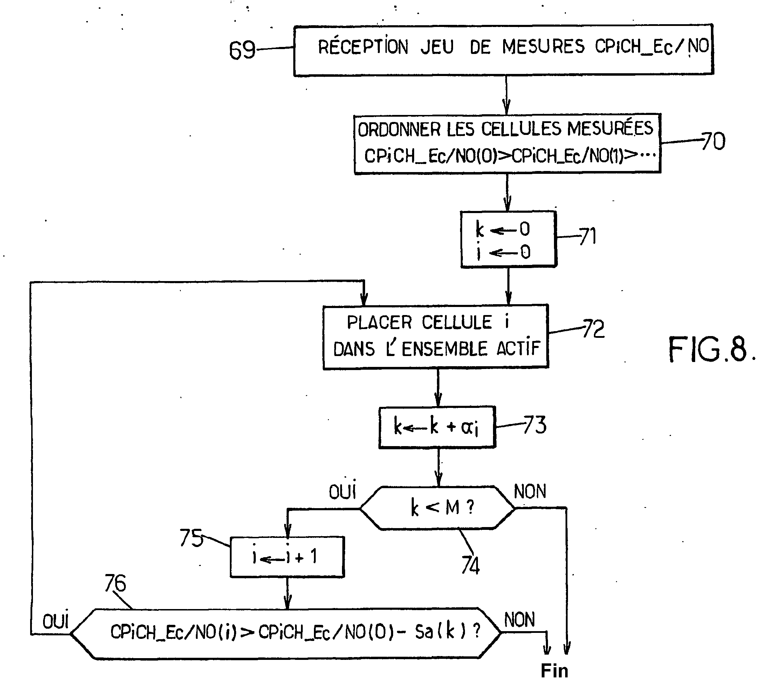

La figure 8 illustre un autre exemple de procédure de détermination de l'ensemble actif par l'étage RRC 15A dans le RNC 12. Cette procédure est exécutée pour un UE donné lorsque le RNC reçoit un nouveau jeu de valeurs CPICH_Ec/N0 mesurées par l'UE en provenance des émetteurs-récepteurs de l'ensemble surveillé (étape 69). Les cellules pour lesquelles ces valeurs ont été obtenues sont d'abord ordonnées dans l'ordre des CPICH_Ec/N0 décroissants (étape 70), et les variables entières k et i sont initialisées à zéro (étape 71).

L'entier i sert à indexer une boucle 72-76 dont la première étape 72 consiste à placer la cellule i dans l'ensemble actif relatif à l'UE considéré. Lors de la première itération, cela revient à placer dans l'ensemble actif la cellule pour laquelle la mesure CPICH_Ec/N0(0) est maximale. A l'étape suivante 73, l'entier k est augmenté du nombre $\alpha_i$ de trajets de propagation du canal physique de la cellule i pour laquelle une énergie de réception supérieure à un seuil déterminé a été détectée par l'UE. Ces nombre, $\alpha_i$ est fourni directement par l'UE ou déduit par le RNC des mesures $\lambda_{i,j}$, $\mu_{i,j}$ ou $\rho_{i,j}$ remontées par l'UE.

L'entier k est ensuite comparé à un paramètre M lors du test 74. Si k ≥ M, le RNC estime qu'un nombre suffisant de trajets énergétiques est déjà couvert par les cellules de l'ensemble actif, de sorte qu'il inhibe l'insertion de nouvelles cellules en sortant de la boucle 72-76. Si k < M, l'entier i est incrémenté d'une unité à l'étape 75, puis un critère d'admission est examiné à l'étape 76. Dans l'exemple de la figure 8, l'examen du critère 76 consiste à comparer la différence CPICH_Ec/N0(0) - CPICH_Ec/N0(i) à un seuil d'admission positif Sa qui peut être une fonction croissante du nombre k de trajets déjà pris en considération (ou du nombre i de cellules déjà placées dans l'ensemble actif). L'algorithme admet la cellule i dans l'ensemble actif en revenant à l'étape 72 quand CPICH_Ec/N0(0) - CPICH_Ec/N0(i) < Sa. Sinon, la cellule i et les cellules suivantes de l'ensemble surveillé ne satisfont pas le critère d'admission, de sorte que l'exécution de l'algorithme se termine.

Les valeurs des seuils Sa(k) et du paramètre M peuvent être choisies par l'opérateur lors de la configuration du réseau radio. Elles peuvent aussi être adaptatives. Le paramètre M peut en outre dépendre de capacités de l'UE, notamment le nombre de doigts dans le récepteur rake, indiquées au RNC dans le cadre de la connexion RRC.

Naturellement, une procédure telle que celle de la figure 7 ou 8 peut porter sur des paramètres autres que les CPICH_Ec/N0, par exemple des RSCP et/ou des SIR. D'autre part, ces procédures ne sont que des exemples, étant donné qu'une grande diversité de stratégies d'insertion/suppression dans l'ensemble actif peuvent être appliquées par le RNC en s'aidant des paramètres représentatifs de la répartition énergétique dans les profils de propagation, tels les $\alpha_i$, $\lambda_{i,j}$, $\mu_{i,j}$ ou $\rho_{i,j}$ précédemment décrits.

En outre, d'autres algorithmes, s'appuyant sur les mêmes types de paramètres représentatifs de la répartition énergétique dans les profils de propagation, peuvent être mis en oeuvre dans le RNC, en particulier pour régler la puissance d'émission des émetteurs-récepteurs de l'ensemble actif vis-à-vis d'un terminal mobile, en vue d'équilibrer la puissance descendante émise par ces émetteurs-récepteurs fixes (cf section 5.2 de la spécification technique TS 25.214, "Physical Layer procedures (FDD)", version 3.6.0, publiée par le 3GPP en mars 2001). La façon dont le RNC commande les Nodes B pour leur fournir les paramètres d'équilibrage requis est décrite dans la section 8.3.7 de la spécification technique 3G TS 25.433 précitée. Le paramètre 'Pref, évoqué dans ladite section, peut être ajusté cellule par cellule pour contrôler la répartition de la puissance sur l'ensemble des émetteurs-récepteurs de l'ensemble actif. Là encore de nombreuses stratégies de contrôle de puissance peuvent apparaître.

A titre d'exemple, dans un cas où l'ensemble actif comporte deux émetteurs-récepteurs fixes correspondant respectivement à des codes d'étalement d'indices i=1 et i=2, le RNC dispose des nombres $\alpha_i$ de trajets ayant une énergie de réception supérieure à un seuil, ainsi que du nombre total β des trajets en question (β = $\alpha_1$ + $\alpha_2$). Il peut d'autre part se faire communiquer les atténuations ("pathloss") pour chaque émetteur-récepteur i au moyen des messages "MEASUREMENT CONTROL" et "MEASUREMENT REPORT" du protocole RRC. Ce paramètre d'atténuation, en dB, est la différence entre la puissance d'émission sur le CPICH primaire par l'émetteur-récepteur i et le paramètre CPICH_RSCP mesuré par l'UE (voir section 10.3.7.38 de la spécification technique 3G TS 25.331 précitée). Le RNC peut alors fixer les paramètres d'équilibrage de puissance en fonction de ces atténuations et des $\alpha_i$, par exemple de la manière suivante :

- si les atténuations et les $\alpha_i$ sont semblables entre les deux émetteurs-récepteurs considérés, on répartit la puissance de manière égale entre les deux émetteurs,

- si les $\alpha_i$ sont semblables alors que les atténuations sont sensiblement différentes entre les deux émetteurs-récepteurs considérés, on fixe les paramètres de réglage de la puissance de manière à émettre plus fort depuis le meilleur émetteur-récepteur (pathloss le plus faible). Ainsi, avec $\alpha_1$ = $\alpha_2$ = 3 et pour une dissymétrie de 3 dB entre les deux atténuations, une simulation a montré que la puissance devait être émise typiquement à 90% par l'émetteur-récepteur ainsi favorisé et à 10% par l'autre l'émetteur-récepteur, ce qui correspond à un écart d'environ 10 dB à l'émission. Une autre simulation basée sur les hypothèses $\alpha_1$ = $\alpha_2$ = 2 et une dissymétrie de 3 dB entre les deux atténuations, a donné comme valeurs typiques de répartition de puissance entre les deux émetteurs-récepteurs, 75% au profit de l'émetteur-récepteur favorisé, contre 25% pour l'autre l'émetteur-récepteur,

- si les atténuations sont semblables alors que les $\alpha_i$ sont sensiblement différents entre les deux émetteurs-récepteurs considérés, on fixe les paramètres de réglage de la puissance de manière à favoriser aussi l'émission depuis le meilleur émetteur-récepteur ($\alpha_i$ le plus élevé),

- si les atténuations et les $\alpha_i$ sont tous deux dissemblables et conduisent à choisir le même « meilleur » émetteur-récepteur, on accentuera encore le déséquilibre de puissance (à la limite en émettant à puissance nulle sur le moins bon émetteur-récepteur),

- si les atténuations et les $\alpha_i$ sont tous deux dissemblables et conduisent à des choix opposés pour le même « meilleur » émetteur-récepteur, on peut appliquer des réglages qui équilibrent la puissance d'émission, ou privilégier l'un ou l'autre des deux critères.

Dans tous les cas, les variations de puissance à mettre en oeuvre peuvent être déterminées de façon empirique à l'aide de simulations. On obtient alors une table de correspondance donnant les paramètres de réglage de la puissance d'émission à adresser à chacun des émetteurs-récepteurs, en fonction de différentes valeurs d'atténuations et de $\alpha_i$ pour chaque émetteur-récepteur. Une fois constituée, cette table peut être stockée dans le RNC 12. Ce dernier peut y faire appel après analyse des mesures qui lui sont remontées, de manière à renvoyer à chaque émetteur-récepteur les paramètres de réglage adéquats de leur puissance d'émission.

Une autre utilisation de paramètres représentatifs de la répartition énergétique dans les profils de propagation est décrite ci-après, bien que de nombreux autres exemples puissent être envisagés. Il s'agit de la détermination du ou des canaux physiques à utiliser pour la communication entre un terminal mobile et un émetteur-récepteur fixe donné, ainsi que de leur format Comme présenté précédemment, un canal de communication a des caractéristiques propres selon son format. Les différents formats existants sont rassemblés dans le tableau 11 de la section 5.3.2 de la spécification technique 3G TS 25.211 précitée. Une des caractéristiques importantes d'un canal de communication est son facteur d'étalement SF, tel que présenté plus haut. Plus le SF d'un canal est élevé, plus le débit qu'il offre sera faible. Mais parallèlement, plus le SF d'un canal est élevé, plus la durée d'un symbole est grande, permettant ainsi une meilleure robustesse aux interférences notamment inter-symboles.

De l'interférence inter-symboles se produit lorsque l'écart temporel entre les trajets significatifs de la réponse impulsionnelle du canal de propagation dépasse la durée d'un symbole, c'est-à-dire la durée d'un chip multipliée par le SF.

Or, comme il a été décrit précédemment, le récepteur peut transmettre au contrôleur radio RNC une indication temporelle pour certains trajets qui peut permettre de caractériser la répartition dans le temps des trajets détectés par le récepteur pendant la durée d'un symbole. Il peut également transmettre une information relative donnant par exemple le temps séparant deux trajets donnés, par exemple les deux trajets de plus grande énergie, sur une période de réception. Dans tous les cas, le RNC, lors du traitement des messages envoyés par le terminal mobile ou par l'émetteur-récepteur fixe, peut en extraire une durée entre deux trajets de propagation, notamment l'écart temporel maximum entre les trajets signalés. Il compare ensuite cette durée avec celle d'un symbole sur les canaux de communication courants. Sur la base de cette comparaison, le RNC peut décider de choisir de modifier les canaux de communication courants pour les remplacer par un ou plusieurs canaux de communication de SF différent. Un traitement similaire peut d'ailleurs être effectué, non pas en cours de communication, mais à l'initialisation de celle-ci, lors de l'allocation de ressources radio.

Pour illustrer ce principe général, considérons un canal de communication de SF 8 utilisé à un moment donné entre un terminal mobile et un émetteur-récepteur fixe. Celui-ci est par exemple un canal de format n°15 selon la codification de la spécification technique 3G TS 25.211. D'après le tableau 11 précité, ce canal peut porter 120+488 = 608 bits de données sur une tranche temporelle. La durée d'un symbole sur ce canal est d'environ 2 $\mu$s. Si les mesures remontées au RNC font apparaître que les échos de plus grande énergie sont séparés de plus de 2 $\mu$s (la différence de longueur des trajets correspondants est supérieure à 600 m environ), le RNC sait qu'il se produira de l'interférence inter-symboles (ISI). Pour pallier cette interférence, tout en assurant le service requis, le RNC peut choisir d'utiliser, en remplacement de ce canal de communication, deux autres canaux de SF 16, par exemple de format n°14 (transmission multicode). La communication est alors également répartie entre les deux canaux. Ces canaux ont une durée de symbole d'environ 4 $\mu$s qui limite fortement l'ISI sans qu'il y ait besoin d'équiper le récepteur d'un égaliseur complexe. Le nombre de bits de données utiles sur chacun de ces canaux est de 56+232 = 288 bits, soit 576 bits pour l'ensemble des deux canaux. Le débit résultant est donc légèrement plus faible avec les deux canaux de SF 16, ce qui est dû à la répétition des bits du DPCCH au détriment de bits d'information du DPDCH. La différence de débit sur le DPDCH est cependant réduite (environ 5%) et n'empêchera pas dans de nombreux cas, d'offrir le service requis.

Le cas inverse est également intéressant, puisqu'il peut permettre d'éviter de transmettre en multicode lorsque le RNC constate que les trajets correspondant aux mesures de profil remontées sont répartis sur une durée plus courte que le temps-symbole d'un canal de SF moitié. Si la communication sollicite plusieurs canaux de SF élevé, le nombre de doigts du récepteur rake utilisés est d'autant plus important et risque, dans le cas d'un terminal mobile contenant un nombre typique de 6 doigts, de ne plus laisser de doigts disponibles notamment pour écouter d'autres émetteurs fixes. Il est donc particulièrement avantageux dans un tel cas de reconfigurer le terminal mobile et l'émetteur-récepteur concernés pour qu'ils utilisent un seul canal de SF plus faible, par exemple de moitié, pour porter leur communication, ce qui augmente en outre le débit de la communication.

La transmission par le RNC des canaux à utiliser par le terminal mobile se fait selon le protocole RRC, tel que présenté dans la spécification technique 3G TS 25.331 précitée, grâce à un message de commande d'initialisation ou de reconfiguration de canaux : "Radio bearer setup", "Radio bearer reconfiguration" ou "Physical channel reconfiguration". Chacun de ces messages contient un élément d'information nommé "Downlink information for each radio link" (voir paragraphe 10.3.6.27 de la 3G TS 25.331). Ce message contient lui-même un élément d'information nommé " Downlink DPCH info for each RL" (voir paragraphe 10.3.6.21 de la 3G TS 25.331). Ce dernier message contient un certain nombre d'informations permettant de caractériser les canaux à utiliser. Parmi ces informations, on trouve les codes de canal descendant (valeurs entre 1 et <maxDPCH-DLchan>), les facteurs d'étalement et les codes de brouillage associés. A la réception de ce message, le terminal mobile est capable d'utiliser le ou les canaux identifiés et transmis par le RNC.

Selon le protocole RRC, le terminal mobile peut par ailleurs indiquer au RNC ses capacités en termes de support de canaux descendants. Cela se fait grâce au message "UE capability information" (voir paragraphe 10.2.56 de la 3G TS 25.331), contenant une information "UE radio access capability" (voir paragraphe 10.3.3.42 de la 3G TS 25.331) pointant elle-même sur l'information "Physical channel capability" (voir paragraphe 10.3.3.25 de la 3G TS 25.331). C'est par exemple par cette voie que le mobile indique au RNC le nombre de canaux physiques qu'il supporte simultanément. Le RNC base ainsi son choix d'allocation de canaux en fonction des capacités effectives du terminal mobile.

La transmission par le RNC des canaux à utiliser par un émetteur-récepteur fixe se fait selon le protocole NBAP, tel que présenté dans la spécification technique 3G TS 25.433 précitée, grâce à un message de commande d'initialisation ou de reconfiguration de canaux : "Radio link set up request" ou "Radio link reconfiguration prepare". Chacun de ces messages contient un élément d'information nommé "FDD DL code information" (voir paragraphe 9.2.214.a de la 3G TS 25.433). Ce dernier comprend un champ appelé "FDD DL Code Information" contenant, comme précédemment, une liste de codes de canal à utiliser par l'émetteur-récepteur fixe parmi une liste de valeurs (de 1 à <maxDPCH-DLchan>), et faisant référence aux codes de brouillage et aux facteurs d'étalement associés.

Il convient de noter, dans le cas où plusieurs RNC interviennent dans la communication, que la commande de configuration, c'est-à-dire d'allocation de canaux, peut être envoyée à l'émetteur-récepteur par le DRNC, alors que c'est toujours le SRNC qui envoie la commande de configuration au terminal mobile.

## Revendications

1. Procédé de contrôle de ressources radio affectées à une communication entre un terminal mobile (14, 14a, 14b) et une infrastructure de réseau radio cellulaire à étalement de spectre, l'infrastructure comprenant au moins un contrôleur de réseau radio (12) et des émetteurs-récepteurs fixes (13) desservant des cellules respectives, le procédé comprenant les étapes suivantes :

   - mesurer des paramètres de canaux de propagation respectifs entre le terminal mobile et plusieurs émetteurs-récepteurs fixes, les mesures comprenant la détermination, pour chaque émetteur-récepteur fixe, d'un profil de propagation incluant au moins un trajet de propagation associé à une énergie de réception respective ;

- transmettre au contrôleur de réseau radio des messages de compte rendu indiquant une partie au moins des paramètres mesurés ; et
- traiter les messages de compte rendu au contrôleur de réseau radio, dans lequel les paramètres indiqués dans les messages de compte rendu pour au moins un émetteur-récepteur fixe comprennent des données dépendant de la répartition énergétique dans le profil de propagation, prises en compte par le contrôleur de réseau radio dans ledit traitement, et

dans lequel ledit traitement des messages de compte rendu au contrôleur de réseau radio (12) comprend une détermination d'un nombre de canaux de communication à utiliser entre un émetteur-récepteur fixe et le terminal mobile (14, 14a, 14b) et d'un format desdits canaux de communication, et une configuration de l'émetteur-récepteur fixe ou du terminal mobile pour prendre en compte lesdits canaux à utiliser.

2. Procédé selon la revendication 1, dans lequel lesdites données dépendant de la répartition énergétique dans le profil de propagation comprennent un nombre de trajets de propagation détectés entre le terminal mobile (14, 14a, 14b) et l'émetteur-récepteur fixe (13) avec une énergie de réception supérieure à un seuil.

3. Procédé selon la revendication 1 ou 2, dans lequel lesdites données dépendant de la répartition énergétique dans le profil de propagation comprennent une indication de position temporelle relative pour des trajets de propagation détectés entre le terminal mobile (14, 14a, 14b) et l'émetteur-récepteur fixe (13).

4. Procédé selon la revendication 3, dans lequel ladite indication de position temporelle relative Inclut une différence entre les temps de réception de deux trajets de propagation, détectés entre le terminal mobile (14, 14a, 14b) et l'émetteur-récepteur fixe (13) avec une énergie de réception supérieure à un seuil.

5. Procédé selon la revendication 2 ou 4, dans lequel ledit seuil est exprimé relativement à une énergie de réception de signaux interféreurs.

6. Procédé selon la revendication 2 ou 4, dans lequel ledit seuil est exprimé relativement à une énergie de réception maximale d'un trajet principal.

7. Procédé selon l'une quelconque des revendications 2 à 6, dans lequel ledit seuil est réglable par une commande de configuration issue du contrôleur de réseau radio (12).

8. Procédé selon l'une quelconque des revendications précédentes, dans lequel l'émetteur-récepteur fixe (13) comprend plusieurs antennes de réception et dans lequel l'énergie de réception associée à un trajet est une somme des énergies reçues par chaque antenne pour ce trajet.

9. Procédé selon l'une quelconque des revendications précédentes, dans lequel lesdites données dépendant de la répartition énergétique dans le profil de propagation comprennent des énergies de réception respectivement associées à un groupe de trajets de propagation détectés entre la terminal mobile (14, 14a, 14b) et l'émetteur-récepteur fixe (13).

10. Procédé selon l'une quelconque des revendications précédentes, dans lequel certaines au moins des mesures des paramètres de canaux de propagation sont des mesures descendantes effectuées par le terminal mobile (14, 14a, 14b) sur des signaux pilotes respectivement émis par les émetteurs-récepteurs fixes (13) et formés avec des codes d'étalement déterminés.

11. Procédé selon la revendication 10, dans lequel lesdites mesures descendantes sont transmises par le terminal mobile (14, 14a, 14b) au contrôleur de réseau radio (12) dans des messages de compte rendu d'un protocole de contrôle de ressources radio, relayés de façon transparente par les émetteurs-récepteurs fixes (13).

12. Procédé selon l'une quelconque des revendications précédentes, dans lequel certaines au moins des mesures des paramètres de canaux de propagation sont des mesures montantes effectuées par les émetteurs-récepteurs fixes (13) sur un signal pivote inclus dans des signaux émis par le terminal mobile (14, 14a, 14b) sur un canal dédié.

13. Procédé selon la revendication 12, dans lequel lesdites mesures montantes sont transmises par les émetteurs-récepteurs fixes (13) au contrôleur de réseau radio (12) dans des messages de compte rendu d'un protocole applicatif de commande des émetteurs-récepteurs fixes.

14. Procédé selon l'une quelconque des revendications précédentes, dans lequel ledit traitement des messages de compte rendu au contrôleur de réseau radio (12) comprend une détermination d'un ensemble actif d'émetteurs-récepteurs fixes relativement au terminal mobile (14, 14a, 14b) et une activation de lien radio entre le terminal mobile et chaque émetteur-récepteur fixe de l'ensemble actif.

15. Procédé selon la revendication 14, dans lequel le traitement des messages de compte rendu par le contrôleur de réseau radio (12) comprend l'examen d'une condition d'admission d'un nouvel émetteur-récepteur fixe (13) dans l'ensemble actif relatif au terminal mobile (14, 14a, 14b) sur la base d'une énergie globale de réception selon le canal de propagation entre le terminal mobile et ledit nouvel émetteur-récepteur fixe, la condition d'admission ayant une sévérité croissante avec le nombre de trajets de propagation détectés entre le terminal mobile et des émetteurs-récepteurs fixes de l'ensemble actif avec une énergie de réception supérieure à un seuil.

16. Procédé selon la revendications 14 ou 15, dans lequel le traitement des messages de compte rendu par le contrôleur de réseau radio (12) comprend l'examen d'une condition de suppression d'un émetteur-récepteur fixe (13) de l'ensemble actif relatif au terminal mobile (14, 14a, 14b) sur la base d'une énergie globale de réception selon le canal de propagation entre le terminal mobile et ledit émetteur-récepteur fixe, la condition de suppression ayant une sévérité décroissante avec le nombre de trajets de propagation détectés entre le terminal mobile et les autres émetteurs-récepteurs fixes de l'ensemble actif avec une énergie de réception supérieure à un seuil.

17. Procédé selon l'une quelconque des revendications 14 à 16, dans lequel le traitement des messages de compte rendu par le contrôleur de réseau radio (12) comprend les étapes suivantes :

   a) insérer dans l'ensemble actif l'émetteur-récepteur fixe (13) pour lequel le canal de propagation présente une énergie de réception globale maximale, et affecter à une variable entière (k) le nombre de trajets de propagation contribuant à ladite énergie de réception globale ;
   b) si ladite variable entière est inférieure à une valeur déterminée, déterminer si un critère d'acceptation (76) est rempli par l'énergie de réception globale que présente le canal de propagation pour un autre émetteur-récepteur fixe;
   c) si le critère d'acceptation est rempli, insérer ledit autre émetteur-récepteur fixe dans l'ensemble actif, augmenter ladite variable entière du nombre de trajets de propagation contribuant à l'énergie de réception globale remplissant ledit critère, et répéter les étapes b) et c).

18. Procédé selon l'une quelconque des revendications précédentes, dans lequel le contrôleur de réseau radio (12) détermine un ensemble actif d'émetteurs-récepteurs fixes relativement au terminal mobile et active un lien radio respects entre le terminal mobile et chaque émetteur-récepteur fixe de l'ensemble actif, et dans lequel ledit traitement des messages de compte rendu au contrôleur de réseau radio (12) comprend la détermination d'une commande de réglage de la puissance d'émission de chaque émetteur-récepteur fixe de l'ensemble actif relativement au terminal mobile (14, 14a, 14b).

19. Procédé selon la revendication 18, dans lequel la détermination de la commande de réglage de puissance est effectuée en fonction de paramètres incluant lesdites données dépendant des répartitions énergétiques dans les profils de propagation ainsi que des atténuations entre le terminal mobile (14, 14a, 14b) et les émetteurs-récepteurs fixes (13) de l'ensemble actif.

20. Procédé selon l'une quelconque des revendications précédentes, dans lequel la détermination du nombre et du format des canaux de communication est effectuée en fonction de paramètres incluant lesdites données dépendant des répartitions énergétiques dans les profils de propagation et d'un débit minimum à respecter pour la communication.

21. Procédé selon l'une quelconque des revendications précédents, dans lequel lesdites données dépendant des répartitions énergétiques dans les profils de propagation comprennent une différence entre les temps de réception de deux trajets de propagation détectés entre le terminal mobile (14, 14a, 14b) et l'émetteur-récepteur fixe (13) et dans lequel le nombre de canaux de communication augmente avec ladite différence et les canaux de communication ont un débit plus faible si ladite différence est grande.

22. Contrôleur de réseau radio pour une infrastructure de réseau radio cellulaire à étalement de spectre, comprenant des moyens (51-52) de communication avec des émetteurs-récepteurs fixes (13) desservant des cellules respectives et avec au moins un terminal mobile (14, 14a, 14b), et des moyens (15A) de contrôle de ressources radio affectées à une communication entre le terminal mobile et l'infrastructure de réseau cellulaire, dans lequel les moyens de contrôle de ressources radio comprennent des moyens pour requérir, par l'intermédiaire des moyens de communication, des messages de compte rendu de mesures de paramètres de canaux de propagation respectifs entre le terminal mobile et plusieurs émetteurs-récepteurs fixes, les mesures comprenant la détermination, pour chaque émetteur-récepteur fixe, d'un profil de propagation incluant au moins un trajet de propagation associé à une énergie de réception respective, et des moyens de traitement des messages de compte rendu, dans lequel les paramètres indiqués dans les messages de compte rendu pour au moins un émetteur-récepteur fixe comprennent des données dépendant de la répartition énergétique dans le profil de propagation, prises en compte par des moyens de traitement, et dans lequel lesdits moyens de traitement comprennent des moyens de détermination d'un nombre de canaux de communication à utiliser entre un émetteur-récepteur fixe et le terminal mobile (14, 14a, 14b) et d'un format desdits canaux de communication, et des moyens de commande de configuration de l'émetteur-récepteur fixe et du terminal mobile pour prendre en compte lesdits canaux à utiliser.

23. Contrôleur de réseau radio selon la revendication 22, dans lequel lesdites données dépendant de la répartition énergétique dans le profil de propagation comprennent un nombre de trajets de propagation détectés entre le terminal mobile (14, 14a, 14b) et l'émetteur-récepteur fixe (13) avec une énergie de réception supérieure à un seuil.

24. Contrôleur de réseau selon la revendication 22 ou 23, dans lequel lesdites données dépendant de la répartition énergétique dans le profil de propagation comprennent une indication de position temporelle relative pour des trajets de propagation détectés entre le terminal mobile (14, 14a, 14b) et l'émetteur-récepteur fixe (13).

25. Contrôleur de réseau selon la revendication 24, dans lequel ladite indication de position temporelle relative inclut une différence entre les temps de réception de deux trajets de propagation, détectés entre le terminal mobile (14, 14a, 14b) et l'émetteur-récepteur fixe (13) avec une énergie de réception supérieure à un seuil.

26. Contrôleur de réseau radio selon la revendication 23 ou 25, dans lequel ledit seuil est exprimé relativement à une énergie de réception de signaux interféreurs.

27. Contrôleur de réseau radio selon la revendication 23 ou 25, dans lequel ledit seuil est exprimé relativement à une énergie de réception maximale d'un trajet principal.

28. Contrôleur de réseau radio selon l'une quelconque des revendications 23 à 27, dans lequel les moyens (15A) de contrôler de ressources radio comprennent des moyens de réglage dudit seuil en envoyant une commande de configuration par l'intermédiaire des moyens de communication.

29. Contrôleur de réseau radio selon l'une quelconque des revendications 22 à 28, dans lequel lesdites données dépendant de la répartition énergétique dans le profil de propagation comprennent des énergies de réception respectivement associées à un groupe de trajets de propagation détectés entre le terminal mobile (14, 14a, 14b) et l'émetteur-récepteur fixe (13).

30. Contrôleur de réseau radio selon l'une quelconque des revendications 22 à 29, dans lequel certaines au moins des mesures des paramètres de canaux de propagation sont des mesures descendantes effectuées par le terminal mobile (14, 14a, 14b) sur des signaux pilotes respectivement émis par les émetteurs-récepteurs fixes (13) et formés avec des codes d'étalement déterminés.

31. Contrôleur de réseau radio selon la revendication 30, dans lequel les moyens de communication comprennent des moyens pour récupérer lesdites mesures descendantes dans des messages de compte rendu d'un protocole de contrôle de ressources radio relayés de façon transparente par les émetteurs-récepteurs fixes.

32. Contrôleur de réseau radio selon l'une quelconque des revendications 22 à 29, dans lequel certaines au moins des mesures des paramètres de canaux de propagation sont des mesures montantes effectuées par les émetteurs-récepteurs fixes (13) sur un signal pilote inclus dans des signaux émis par le terminal mobile (14, 14a, 14b) sur un canal dédié.

33. Contrôleur de réseau radio selon la revendication 32, dans lequel les moyens de communication, comprennent des moyens (52) pour récupérer lesdites mesures montantes dans des messages de compte rendu d'un protocole applicatif de commande des émetteurs-récepteurs fixes.

34. Contrôleur de réseau radio selon l'une quelconque des revendications 22 à 33, dans lequel lesdites moyens de traitement des messages de compte rendu comprennent des moyens pour déterminer un ensemble actif d'émetteurs-récepteurs fixes relativement au terminal mobile (14, 14a, 14b) et des moyens pour activer un lien radio respectif entre le terminal mobile et chaque émetteur-récepteur fixe de l'ensemble actif.

35. Contrôleur de réseau radio selon la revendication 34, dans lequel les moyens de traitement des messages de compte rendu comprennent des moyens d'examen d'une condition d'admission d'un nouvel émetteur-récepteur fixe (13) dans l'ensemble actif relatif au terminal mobile (14, 14a, 14b) sur la base d'une énergie globale de réception selon le canal de propagation entre le terminal mobile et ledit nouvel émetteur-récepteur fixe, la condition d'admission ayant une sévérité croissante avec le nombre de trajets de propagation détectés entre le terminal mobile et des émetteurs-récepteurs fixes de l'ensemble actif avec une énergie de réception supérieure à un seuil.

**36.** Contrôleur de réseau radio selon la revendication 34 ou 35, dans lequel les moyens de traitement des messages de compte rendu comprennent des moyens d'examen d'une condition de suppression d'un émetteur-récepteur fixe (13) de l'ensemble actif relatif au terminal mobile (14, 14a, 14b) sur la base d'une énergie globale de réception selon le canal de propagation entre le terminal mobile et ledit émetteur-récepteur fixe, la condition de suppression ayant une sévérité décroissante avec le nombre de trajets de propagation détectés entre le terminal mobile et les autres émetteurs-récepteurs fixes de l'ensemble actif avec une énergie de réception supérieure à un seuil.

**37.** Contrôleur de réseau radio selon l'une quelconque des revendications 34 à 36, dans lequel les moyens de traitement comprennent des moyens pour exécuter les étapes suivantes :

a) insérer dans l'ensemble actif l'émetteur-récepteur fixe (13) pour lequel le canal de propagation présente une énergie de réception globale maximale, et affecter à une variable entière (k) le nombre de trajets de propagation contribuant à ladite énergie de réception globale ;
b) si ladite variable entière est inférieure à une valeur déterminée, déterminer si un critère d'acceptation (76) est rempli par l'énergie de réception globale que présente le canal de propagation pour un autre émetteur-récepteur fixe;
c) si le critère d'acceptation est rempli, insérer ledit autre émetteur-récepteur fixe dans l'ensemble actif, augmenter ladite variable entière du nombre de trajets de propagation contribuant à l'énergie de réception globale remplissant ledit critère, et répéter les étapes b) et c).

**38.** Contrôleur de réseau radio selon l'une quelconque des revendications 22 à 37, dans lequel lesdits moyens de traitement des messages de compte rendu comprennent des moyens pour déterminer un ensemble actif d'émetteurs-récepteurs fixes relativement au terminal mobile (14, 14a, 14b) et des moyens de commande de réglage de la puissance d'émission de chaque émetteur-récepteur fixe de l'ensemble actif relativement au terminal mobile (14, 14a, 14b).

**39.** Contrôleur de réseau radio selon la revendication 38, dans lequel la détermination de la commande de réglage de puissance est effectuée en fonction de paramètres incluant lesdites données dépendant des répartitions énergétiques dans les profils de propagation ainsi que des atténuations entre le terminal mobile (14, 14a, 14b) et les émetteurs-récepteurs fixes (13) de l'ensemble actif.

**40.** Contrôleur de réseau radio selon l'une quelconque des revendications 22 à 39, dans lequel la détermination du nombre et du format des canaux de communication est effectuée en fonction de paramètres incluant lesdites données dépendant des répartitions énergétiques dans les profils de propagation et d'un débit minimum à respecter pour la communication.

**41.** Contrôleur de réseau radio selon l'une quelconque des revendications 22 à 40, dans lequel lesdites données dépendant des répartitions énergétiques dans les profils de propagation comprennent une différence entre les temps de réception de deux trajets de propagation détectés entre le terminal mobile (14, 14a, 14b) et l'émetteur-récepteur fixe (13) et dans lequel le nombre de canaux de communication augmente avec ladite différence et les canaux de communication ont un débit plus faible si ladite différence est grande.

**Claims**

**1.** A method of controlling radio resources assigned to a communication between a mobile terminal (14, 14a, 14b) and a cellular radio network infrastructure with spread spectrum, the infrastructure comprising at least one radio network controller (12) and fixed transceivers (13) serving respective cells, the method comprising the following steps:

- measuring the respective propagation channel parameters between the mobile terminal and several fixed transceivers, the measurements including the determination, for each fixed transceiver, of a propagation profile including at least one propagation path associated with a respective reception energy;
- transmitting to the radio network controller report messages indicating at least a part of the measured parameters; and
- processing the report messages at the radio network controller, in which the parameters indicated in the report messages for at least one fixed transceiver comprise data dependent on the energy distribution in the propagation profile, taken into account by the radio network controller in said processing, and

in which said processing of report messages at the radio network controller (12) comprises a determination of a number of communication channels to be used between a fixed transceiver and the mobile terminal (14, 14a, 14b) and of a format of said communication channels, and a configuration of the fixed transceiver or of the mobile terminal to take said channels to be used into account.

**2.** The method according to claim 1, in which said data dependent on the energy distribution in the propagation profile comprise a number of propagation paths detected between the mobile terminal (14, 14a, 14b) and the fixed transceiver (13) with a reception energy greater than a threshold.

**3.** The method according to claim 1 or 2, in which said data dependent on the energy distribution in the propagation profile comprise an indication of relative time position for the propagation paths detected between the mobile terminal (14, 14a, 14b) and the fixed transceiver (13).

**4.** The method according to claim 3, in which said indication of relative time position includes a difference between the reception times of two propagation paths, detected between the mobile terminal (14, 14a, 14b) and the fixed transceiver (13) with a reception energy greater than a threshold.

**5.** The method according to claim 2 or 4, in which said threshold is expressed relative to a reception energy of interferer signals.

**6.** The method according to claim 2 or 4, in which said threshold is expressed relative to a maximum reception energy of a main path.

**7.** The method according to any one of claims 2 to 6, in which said threshold is adjustable by a configuration command from the radio network controller (12).

**8.** The method according to any one of the previous claims, in which the fixed transceiver (13) comprises several receiving antennae and in which the reception energy associated with a path is a sum of the energies received by each antenna for this path.

**9.** The method according to any one of the previous claims, in which said data dependent on the energy distribution in the propagation profile comprise reception energies respectively associated with a group of propagation paths detected between the mobile terminal (14, 14a, 14b) and the fixed transceiver (13).

**10.** The method according to any one of the previous claims, in which at least some of the propagation channel parameter measurements are downlink measurements taken by the mobile terminal (14, 14a, 14b) on the pilot signals respectively transmitted by the fixed transceivers (13) and formed with the determined spreading codes.

**11.** The method according to claim 10, in which said downlink measurements are transmitted by the mobile terminal (14, 14a, 14b) to the radio network controller (12) in the report messages of a radio resource control protocol, relayed transparently by the fixed transceivers (13).

**12.** The method according to any one of the previous claims, in which at least some of the propagation channel parameter measurements are uplink measurements taken by the fixed transceivers (13) on a pilot signal included in the signals transmitted by the mobile terminal (14, 14a, 14b) on a dedicated channel.

**13.** The method according to claim 12, in which said uplink measurements are transmitted by fixed transceivers (13) to the radio network controller (12) in the report messages of an application protocol for controlling the fixed transceivers.

**14.** The method according to any one of the previous claims, in which said processing of report messages for the radio network controller (12) comprises a determination of an active set of fixed transceivers relative to the mobile terminal (14, 14a, 14b) and an activation of a radio link between the mobile terminal and each fixed transceiver of the active set.

**15.** The method according to claim 14, in which the processing of report messages by the radio network controller (12) comprises the examination of a condition of admission of a new fixed transceiver (13) in the active set relative to the mobile terminal (14, 14a, 14b) on the basis of a global reception energy according to the propagation channel between the mobile terminal and said new fixed transceiver, the condition of admission having a severity that increases with the number of propagation paths detected between the mobile terminal and the fixed transceivers of the active set with a reception energy greater than a threshold.

**16.** The method according to claim 14 or 15, in which the processing of report messages by the radio network controller (12) comprises the examination of a condition of deletion of a fixed transceiver (13) from the active set relative to the mobile terminal (14, 14a, 14b) on the basis of a global reception energy according to the propagation channel between the mobile terminal and said fixed transceiver, the condition of deletion having a severity that decreases with the number of propagation paths detected between the mobile terminal and the fixed transceivers of the active set with a reception energy greater than a threshold.

**17.** The method according to any one of claims 14 to 16, in which the processing of report messages by the radio network controller (12) comprises the following steps:

a) inserting in the active set the fixed transceiver (13) for which the propagation channel presents a maximum global reception energy, and assigning to an integer variable (k) the number of propagation paths contributing to said global reception energy;

b) if said integer variable is less than a determined value, determining if an acceptance criterion (76) is satisfied by the global reception energy that presents the propagation channel for another fixed transceiver;

c) if the acceptance criterion is satisfied, inserting said other fixed transceiver into the active set, increasing said integer variable by the number of propagation paths contributing to the global reception energy satisfying said criterion, and repeating steps b) and c).

18. The method according to any one of the previous claims, in which the radio network controller (12) determines an active set of fixed transceivers relative to the mobile terminal and activates a respective radio link between the mobile terminal and each fixed transceiver of the active set, and in which said processing of report messages to the radio network controller (12) comprises the determination of a command to adjust the transmission power of each fixed transceiver of the active set relative to the mobile terminal (14, 14a, 14b).

19. The method according to claim 18, in which the determination of the command to adjust the power is made according to the parameters including said data dependent on the energy distributions in the propagation profiles as well as the attenuations between the mobile terminal (14, 14a, 14b) and the fixed transceivers (13) of the active set.

20. The method according to any one of the previous claims, in which the determination of the number and format of the communication channels is made according to the parameters including said data dependent on the energy distributions in the propagation profiles and on a minimum bit rate to be observed for the communication.

21. The method according to any one of the previous claims, in which said data dependent on the energy distributions in the propagation profiles comprise a difference between the reception times of two propagation paths detected between the mobile terminal (14, 14a, 14b) and the fixed transceiver (13) and in which the number of communication channels increases with said difference and the communication channels have a lower bit rate if said difference is great.

22. A radio network controller for a cellular radio network infrastructure with spread spectrum, comprising means (51-52) of communication with the fixed transceivers (13) serving the respective cells and with at least one mobile terminal (14, 14a, 14b), and means (15A) for controlling radio resources assigned to a communication between the mobile terminal and the cellular network infrastructure, in which the radio resource control means comprise means for requesting, through the communication means, report messages of measurements of respective propagation channel parameters between the mobile terminal and several fixed transceivers, the measurements including the determination, for each fixed transceiver, of a propagation profile, including at least one propagation path associated with a respective reception energy, and means of processing report messages, in which the parameters indicated in the report messages for at least one fixed transceiver comprise data dependent on the energy distribution in the propagation profile, taken into consideration by the processing means, and in which said processing means comprise means for determining a number of communication channels to use between a fixed transceiver and the mobile terminal (14, 14a, 14b) and a format of said communication channels, and means for controlling the configuration of the fixed transceiver and the mobile terminal to take said channels to be used into account.

23. The radio network controller according to claim 22, in which said data dependent on the energy distribution in the propagation profile comprise a number of propagation paths detected between the mobile terminal (14, 14a, 14b) and the fixed transceiver (13) with a reception energy greater than a threshold.

24. The network controller according to claim 22 or 23, in which said data dependent on the energy distribution in the propagation profile comprise an indication of relative time position for the propagation paths detected between the mobile terminal (14, 14a, 14b) and the fixed transceiver (13).

25. The network controller according to claim 24, in which said indication of relative time position includes a difference between the reception times of two propagation paths, detected between the mobile terminal (14, 14a, 14b) and the fixed transceiver (13) with a reception energy greater than a threshold.

26. The radio network controller according to claim 23 or 25, in which said threshold is expressed relative to a reception energy of interferer signals.

27. The radio network controller according to claim 23 or 25, in which said threshold is expressed relative to a maximum reception energy of a main path.

28. The radio network controller according to any one of claims 23 to 27, in which the means (15A) for controlling radio resources comprise means for adjusting said threshold by sending a configuration command through the communication means.

29. The radio network controller according to any one of claims 22 to 28, in which said data dependent on the energy distribution in the propagation profile comprise reception energies respectively associated with a group of propagation paths detected between the mobile terminal (14, 14a, 14b) and the fixed transceiver (13).

30. The radio network controller according to any one of claims 22 to 29, in which at least some of the propagation channel parameter measurements are downlink measurements taken by the mobile terminal (14, 14a, 14b) on the pilot signals respectively transmitted by the fixed transceivers (13) and formed with determined spreading codes.

31. The radio network controller according to claim 30, in which the communication means comprise means for recovering said downlink measurements in the report messages of a radio resource control protocol relayed transparently by the fixed transceivers.

32. The radio network controller according to any one of claims 22 to 29, in which at least some of the propagation channel parameter measurements are uplink measurements taken by the fixed transceivers (13) on a pilot signal included in the signals transmitted by the mobile terminal (14, 14a, 14b) on a dedicated channel.

33. The radio network controller according to claim 32, in which the communication means comprise means (52) for recovering said uplink measurements in the report messages of an application protocol for controlling the fixed transceivers.

34. The radio network controller according to any one of claims 22 to 33, in which said means for processing report messages comprise means for determining an active set of fixed transceivers relative to the mobile terminal (14, 14a, 14b) and means to activate a respective radio link between the mobile terminal and each fixed transceiver of the active set.

35. The radio network controller according to claim 34, in which the means for processing the report messages comprise means for examining a condition of admission of a new fixed transceiver (13) in the active set relative to the mobile terminal (14, 14a, 14b) on the basis of a global reception energy according to the propagation channel between the mobile terminal and said new fixed transceiver, the condition of admission having a severity that increases with the number of propagation paths detected between the mobile terminal and the fixed transceivers of the active set with a reception energy greater than a threshold.

36. The radio network controller according to claim 34 or 35, in which the means for processing report messages comprise means for examining a condition of deletion of a fixed transceiver (13) from the active set relative to the mobile terminal (14, 14a, 14b) on the basis of a global reception energy according to the propagation channel between the mobile terminal and said fixed transceiver, the condition of deletion having a severity that decreases with the number of propagation paths detected between the mobile terminal and other fixed transceivers from the active set with a reception energy greater than a threshold.

37. The radio network controller according to any one of claims 34 to 36, in which the processing means comprise means for executing the following steps:

    a) inserting in the active set the fixed transceiver (13) for which the propagation channel presents a maximum global reception energy, and assigning to an integer variable (k) the number of propagation paths contributing to said global reception energy;
    b) if said integer variable is less than a determined value, determining if an acceptance criterion (76) is satisfied by the global reception energy that the propagation channel presents for another fixed transceiver;
    c) if the acceptance criterion is satisfied, inserting said other fixed transceiver in the active set, increasing said integer variable by the number of propagation paths contributing to the global reception energy satisfying said criterion and repeating steps b) and c).

38. The radio network controller according to any one of claims 22 to 37, in which said means for processing report messages comprise means for determining an active set of fixed transceivers relative to the mobile terminal (14, 14a, 14b) and means for controlling the adjustment of the transmission power of each fixed transceiver of the active set relative to the mobile terminal (14, 14a, 14b).

39. The radio network controller according to claim 38, in which the determination of the power adjustment control is made according to parameters including said data dependent on the energy distributions in the propagation profiles as well as the attenuations between the mobile terminal (14, 14a, 14b) and the fixed transceivers (13) of the active set.

**40.** The radio network controller according to any one of claims 22 to 39, in which the determination of the number and format of communication channels is made according to parameters including said data dependent on energy distributions in the propagation profiles and a minimum bit rate to be observed for the communication.

**41.** The radio network controller according to any one of claims 22 to 40, in which said data dependent on energy distributions in the propagation profiles comprise a difference between the reception times of two propagation paths detected between the mobile terminal (14, 14a, 14b) and the fixed transceiver (13) and in which the number of communication channels increases with said difference and the communication channels have a lower bit rate if said difference is great.

**Patentansprüche**

**1.** Verfahren zur Steuerung von Funkressourcen, die einer Kommunikation zwischen einem mobilen Endgerät (14, 14a, 14b) und einer zellenförmigen Funknetz-Infrastruktur mit Frequenzspreizung zugeordnet sind, wobei die Infrastruktur zumindest einen Radio Network Controller (12) und fest installierte Sende/Empfangseinheiten (13) zur Bedienung der jeweiligen Zellen umfasst, wobei das Verfahren die folgenden Schritte umfasst:

- Messung der Parameter von jeweiligen Ausbreitungskanälen zwischen dem mobilen Endgerät und mehreren fest installierten Sende/ Empfangseinheiten, wobei die Messungen, für jede fest installierte Sende/Empfangseinheit, die Bestimmung eines Ausbreitungsprofils einschließlich zumindest eines Ausbreitungsweges umfassen, der einer jeweiligen Empfangsenergie zugeordnet ist;
- Übertragung von Berichtsmeldungen mit Angabe zumindest eines Teils der gemessenen Parameter an den Radio Network Controller; und
- Verarbeitung der Berichtsmeldungen im Radio Network Controller,

wobei die in den Berichtsmeldungen für zumindest eine fest installierte Sende/Empfangseinheit angegebenen Parameter Daten enthalten, die von der energetischen Verteilung in dem Ausbreitungsprofil abhängen, die von dem Radio Network Controller bei der Verarbeitung berücksichtigt werden; und wobei die Verarbeitung der Berichtsmeldungen im Radio Network Controller (12) eine Bestimmung einer Anzahl von Kommunikationskanälen, die zwischen einer fest installierten Sende/Empfangseinheit und dem mobilen Endgerät (14, 14a, 14b) zu verwenden sind, und eines Formats der Kommunikationskanäle und eine Konfiguration der fest installierten Sende/Empfangseinheit oder des mobilen Endgeräts für die Berücksichtigung der zu verwendenden Kanäle umfasst.

**2.** Verfahren nach Anspruch 1, wobei die Daten, die von der energetischen Verteilung in dem Ausbreitungsprofil abhängen, eine Anzahl von Ausbreitungswegen umfassen, die zwischen dem mobilen Endgerät (14, 14a, 14b) und der fest installierten Sende/Empfangseinheit (13) mit einer Empfangsenergie, die über einem Schwellenwert liegt, ermittelt werden.

**3.** Verfahren nach Anspruch 1 oder 2, wobei die Daten, die von der energetischen Verteilung in dem Ausbreitungsprofil abhängen, eine Angabe über die relative zeitliche Position für die Ausbreitungswege umfassen, die zwischen dem beweglichen Endgerät (14, 14a, 14b) und der fest installierten Sende/Empfangseinheit (13) ermittelt werden.

**4.** Verfahren nach Anspruch 3, wobei die Angabe über die relative zeitliche Position eine Differenz zwischen den Empfangszeiten von zwei Ausbreitungswegen einschließt, die zwischen dem beweglichen Endgerät (14, 14a, 14b) und der fest installierten Sende/Empfangseinheit (13) mit einer Empfangsenergie, die über einem Schwellenwert liegt, ermittelt werden.

**5.** Verfahren nach Anspruch 2 oder 4, wobei der Schwellenwert relativ zu einer Empfangsenergie von Störsignalen ausgedrückt wird.

**6.** Verfahren nach Anspruch 2 oder 4, wobei der Schwellenwert relativ zu einer maximalen Empfangsenergie eines Hauptweges ausgedrückt wird.

**7.** Verfahren nach einem der Ansprüche 2 bis 6, wobei der Schwellenwert über einen Konfigurationsbefehl regelbar ist, der vom Radio Network Controller (12) ausgegeben wird.

**8.** Verfahren nach einem der vorstehenden Ansprüche, wobei die Sende/Empfangseinheit (13) mehrere Empfangsantennen umfasst und wobei die Empfangsenergie, die einem Weg zugeordnet ist, eine Summe der Energien ist, die von jeder Antenne für diesen Weg empfangen werden.

**9.** Verfahren nach einem der vorstehenden Ansprüche, wobei die Daten, die von der energetischen Verteilung in dem Ausbreitungsprofil abhängen, Empfangsenergien umfassen, die jeweils einer Gruppe von Ausbreitungswegen zugeordnet sind, die zwischen dem beweglichen Endgerät (14, 14a, 14b) und der fest installierten Sende/Empfangseinheit (13) ermittelt werden.

10. Verfahren nach einem der vorstehenden Ansprüche, wobei zumindest einige der Messungen der Parameter von Ausbreitungskanälen absteigende Messungen sind, die durch das mobile Endgerät (14, 14a, 14b) an den Steuersignalen durchgeführt werden, die jeweils durch die fest installierten Sende/Empfangseinheiten (13) gesendet werden und mit festgelegten Spreizcodes gebildet sind.

11. Verfahren nach Anspruch 10, wobei die absteigenden Messungen durch das mobile Endgerät (14, 14a, 14b) in Berichtsmeldungen eines Radio Resource Control Protocol an den Radio Network Controller (12) übertragen werden, die durch die fest installierten Sende/Empfangseinheiten (13) auf transparente Weise übertragen werden.

12. Verfahren nach einem der vorstehenden Ansprüche, wobei zumindest einige der Messungen der Parameter von Ausbreitungskanälen aufsteigende Messungen sind, die durch die fest installierten Sende/Empfangseinheiten (13) an einem Steuersignal durchgeführt werden, das in den Signalen, die von dem mobilen Endgerät (14, 14a, 14b) auf einem dedizierten Kanal gesendet werden, enthalten ist.

13. Verfahren nach Anspruch 12, wobei die aufsteigenden Messungen durch die fest installierten Sende/Empfangseinheiten (13) in Berichtsmeldungen eines Control Application Protocol der fest installierten Sende/Empfangseinheiten (13) an den Radio Network Controller (12) übertragen werden.

14. Verfahren nach einem der vorstehenden Ansprüche, wobei die Verarbeitung der Berichtsmeldungen im Radio Network Controller (12) eine Bestimmung einer aktiven Anordnung von fest installierten Sende/Empfangseinheiten (13) relativ zu dem mobilen Endgerät (14, 14a, 14b) und eine Aktivierung der Funkverbindung zwischen dem mobilen Endgerät und jeder fest installierten Sende/Empfangseinheit der aktiven Anordnung umfasst.

15. Verfahren nach Anspruch 14, wobei die Verarbeitung der Berichtsmeldungen durch den Radio Network Controller (12) die Prüfung einer Bedingung für die Aufnahme einer neuen fest installierten Sende/Empfangseinheit (13) in die aktive Anordnung relativ zu dem mobilen Endgerät (14, 14a, 14b) auf der Grundlage einer globalen Empfangsenergie entsprechend dem Ausbreitungskanal zwischen dem mobilen Endgerät (14, 14a, 14b) und der fest installierten Sende/Empfangseinheit umfasst, wobei die Strenge der Bedingung für die Aufnahme mit der Anzahl von Ausbreitungswegen zunimmt, die zwischen dem mobilen Endgerät und den fest installierten Sende/Empfangseinheiten der aktiven Anordnung mit einer Empfangsenergie, die über einem Schwellenwert liegt, ermittelt werden.

16. Verfahren nach Anspruch 14 oder 15, wobei die Verarbeitung der Berichtsmeldungen durch den Radio Network Controller (12) die Prüfung einer Bedingung für die Entnahme einer fest installierten Sende/Empfangseinheit (13) aus der aktiven Anordnung relativ zu dem mobilen Endgerät (14, 14a, 14b) auf der Grundlage einer globalen Empfangsenergie entsprechend dem Ausbreitungskanal zwischen dem mobilen Endgerät und diesem fest installierten Sende/Empfangseinheit umfasst, wobei die Strenge der Bedingung für die Entnehme mit der Anzahl von Ausbreitungswegen abnimmt, die zwischen dem mobilen Endgerät und den anderen fest installierten Sende/Empfangseinheiten der aktiven Anordnung mit einer Empfangsenergie, die über einem Schwellenwert liegt, ermittelt werden.

17. Verfahren nach einem der Ansprüche 14 bis 16, wobei die Verarbeitung der Berichtsmeldungen durch den Radio Network Controller (12) die folgenden Schritte umfasst:

a) Einfügen der fest installierten Sende/Empfangseinheit (13), bei welcher der Ausbreitungskanal eine maximale globale Empfangsenergie aufweist, in die aktive Anordnung und Zuweisung der Anzahl von Ausbreitungswegen, die zu der globalen Empfangsenergie beitragen, zu einer Integer-Variable (k);
b) falls die Integer-Variable kleiner als ein festgelegter Wert ist, Bestimmung, ob ein Akzeptanzkriterium (76) durch die globale Empfangsenergie, die der Ausbreitungskanal bei einer anderen fest installierten Sende/Empfangseinheit aufweist, erfüllt ist;
c) falls das Akzeptanzkriterium erfüllt ist, Einfügen der anderen fest installierten Sende/Empfangseinheit in die aktive Anordnung, Erhöhung der Integer-Variable um die Anzahl von Ausbreitungswegen, die zu der globalen Empfangsenergie, welche das Kriterium erfüllt, beitragen, und Wiederholung der Schritte b) und c).

18. Verfahren nach einem der vorstehenden Ansprüche, wobei der Radio Network Controller (12) eine aktive Anordnung von fest installierten Sende/Empfangseinheiten relativ zu dem mobilen Endgerät bestimmt und eine jeweilige Funkverbindung zwischen dem mobilen Endgerät und jeder fest installierten Sende/Empfangseinheit der aktiven Anordnung aktiviert und wobei die Verarbeitung der Berichtsmeldungen in dem Radio Network Controller (12) die Bestimmung eines Befehls zur Regelung der Sendeleistung jeder fest installierten Sende/Empfangseinheit der aktiven Anordnung relativ zu dem mobilen Endgerät (14, 14a, 14b) umfasst.

19. Verfahren nach Anspruch 18, wobei die Bestimmung des Befehls zur Regelung der Leistung in Abhängigkeit von Parametern, welche die Daten, die von der energetischen Verteilung in den Ausbreitungsprofilen abhängen, einschließen, sowie von Dämpfungen zwischen dem mobilen Endgerät (14, 14a, 14b) und den fest installierten Sende/Empfangseinheiten (13) der aktiven Anordnung erfolgt.

20. Verfahren nach einem der vorstehenden Ansprüche, wobei die Bestimmung der Anzahl und des Formats der Kommunikationskanäle in Abhängigkeit von Parametern, welche die Daten, die von der energetischen Verteilung in den Ausbreitungsprofilen abhängen, einschließen, und von einem Mindestdurchsatz, der für die Kommunikation einzuhalten ist, erfolgt.

21. Verfahren nach einem der vorstehenden Ansprüche, wobei die Daten, die von der energetischen Verteilung in den Ausbreitungsprofilen abhängen, eine Differenz zwischen den Empfangszeiten von zwei Ausbreitungswegen, die zwischen dem mobilen Endgerät (14, 14a, 14b) und der fest installierten Sende/Empfangseinheit (13) ermittelt werden, umfassen und wobei die Anzahl von Kommunikationskanälen mit der Differenz steigt und die Kommunikationskanäle einen geringeren Durchsatz haben, wenn die Differenz groß ist.

22. Radio Network Controller für eine zellenförmige Funknetz-Infrastruktur mit Frequenzspreizung, umfassend Mittel (51-52) für die Kommunikation mit fest installierten Sende/Empfangseinheiten (13) zur Bedienung der jeweiligen Zellen und mit zumindest einem mobilen Endgerät (14, 14a, 14b) und Mittel (15a) zur Steuerung von Funkressourcen, die einer Kommunikation zwischen dem mobilen Endgerät und der zellenförmigen Netz-Infrastruktur zugeordnet sind, wobei die Mittel zur Steuerung von Funkressourcen Mittel umfassen, um über die Kommunikationsmittel Berichtsmeldungen von Messungen von Parametern von jeweiligen Ausbreitungskanälen zwischen dem mobilen Endgerät und mehreren fest installierten Sende/Empfangseinheiten anzufordern, wobei die Messungen, für jede fest installierte Sende/Empfangseinheit, die Bestimmung eines Ausbreitungsprofils einschließlich zumindest eines Ausbreitungsweges, der einer jeweiligen Empfangsenergie zugeordnet ist, und Mittel zur Verarbeitung der Berichtsmeldungen umfassen, wobei die in den Berichtsmeldungen für zumindest eine fest installierte Sende/Empfangseinheit angegebenen Parameter Daten enthalten, die von der energetischen Verteilung in dem Ausbreitungsprofil abhängen, die von den Verarbeitungsmitteln berücksichtigt werden, und wobei die Verarbeitungsmittel Mittel zur Bestimmung einer Anzahl von Verbindungskanälen, die zwischen einer fest installierten Sende/Empfangseinheit und dem mobilen Endgerät (14, 14a, 14b) zu verwenden sind, und eines Formats der Verbindungskanäle und Mittel zur Steuerung der Konfiguration der fest installierten Sende/Empfangseinheit und des mobilen Endgeräts für die Berücksichtigung der zu verwendenden Kanäle umfassen.

23. Radio Network Controller nach Anspruch 22, wobei die Daten, die von der energetischen Verteilung in dem Ausbreitungsprofil abhängen, eine Anzahl von Ausbreitungswegen umfassen, die zwischen dem mobilen Endgerät (14, 14a, 14b) und der fest installierten Sende/Empfangseinheit (13) mit einer Empfangsenergie, die über einem Schwellenwert liegt, ermittelt werden.

24. Radio Network Controller nach Anspruch 22 oder 23, wobei die Daten, die von der energetischen Verteilung in dem Ausbreitungsprofil abhängen, eine Angabe über die relative zeitliche Position für die Ausbreitungswege enthalten, die zwischen dem beweglichen Endgerät (14, 14a, 14b) und der fest installierten Sende/Empfangseinheit (13) ermittelt werden.

25. Radio Network Controller nach Anspruch 24, wobei die Angabe über die relative zeitliche Position eine Differenz zwischen den Empfangszeiten von zwei Ausbreitungswegen einschließt, die zwischen dem beweglichen Endgerät (14, 14a, 14b) und der fest installierten Sende/Empfangseinheit (13) mit einer Empfangsenergie, die größer als ein Schwellenwert ist, ermittelt werden.

26. Radio Network Controller nach Anspruch 23 oder 25, wobei der Schwellenwert relativ zu einer Empfangsenergie von Störsignalen ausgedrückt wird.

27. Radio Network Controller nach Anspruch 23 oder 25, wobei der Schwellenwert relativ zu einer maximalen Empfangsenergie eines Hauptweges ausgedrückt wird.

28. Radio Network Controller nach einem der Ansprüche 23 bis 27, wobei die Mittel (15A) für die Steuerung von Funkressourcen Mittel zur Regelung des Schwellenwerts umfassen, indem über die Kommunikationsmittel ein Konfigurationsbefehl versendet wird.

29. Radio Network Controller nach einem der Ansprüche 22 bis 28, wobei die Daten, die von der energetischen Verteilung in dem Ausbreitungsprofil abhängen, Empfangsenergien umfassen, die jeweils einer Gruppe von Ausbreitungswegen zugeordnet sind, die zwischen dem beweglichen Endgerät (14, 14a, 14b) und der fest installierten Sende/Empfangseinheit (13) ermittelt werden.

30. Radio Network Controller nach einem der Ansprüche 22 bis 29, wobei zumindest einige der Messungen der Parameter von Ausbreitungskanälen absteigende Messungen sind, die durch das mobile Endgerät (14, 14a, 14b) an den Steuersignalen durchgeführt werden, die jeweils von den fest installierten Sende/Empfangseinheiten (13) gesendet werden und mit festgelegten Spreizcodes gebildet sind.

31. Radio Network Controller nach Anspruch 30, wobei die Kommunikationsmittel Mittel umfassen, um die absteigenden Messungen in Berichtsmeldungen eines Radio Resource Control Protocol, die auf transparente Weise durch die fest installierten Sende-Empfangseinheiten übertragen werden, abzufangen.

32. Radio Network Controller nach einem der Ansprüche 22 bis 29, wobei zumindest einige der Messungen der Parameter von Ausbreitungskanälen aufsteigende Messungen sind, die durch die fest installierten Sende/Empfangseinheiten (13) an einem Steuersignal durchgeführt werden, das in den Signalen, die von dem mobilen Endgerät (14, 14a, 14b) auf einem dedizierten Kanal gesendet werden, enthalten ist.

33. Radio Network Controller nach Anspruch 32, wobei die Kommunikationsmittel Mittel (52) umfassen, um die aufsteigenden Messungen in Berichtsmeldungen eines Control Application Protocol der fest installierten Sende-Empfangseinheiten abzufangen.

34. Radio Network Controller nach einem der Ansprüche 22 bis 33, wobei die Mittel zur Verarbeitung der Berichtsmeldungen Mittel zur Bestimmung einer aktiven Anordnung fest installierter Sende-Empfangseinheiten relativ zu dem mobilen Endgerät (14, 14a, 14b) und Mittel zur Aktivierung einer jeweiligen Funkverbindung zwischen dem mobilen Endgerät und jeder fest installierten Sende/Empfangseinheit der aktiven Anordnung umfassen.

35. Radio Network Controller nach Anspruch 34, wobei die Mittel zur Verarbeitung der Berichtsmeldungen Mittel umfassen zur Prüfung einer Bedingung für die Aufnahme einer neuen fest installierten Sende/Empfangseinheit (13) in die aktive Anordnung relativ zu dem mobilen Endgerät (14, 14a, 14b) auf der Grundlage einer globalen Empfangsenergie entsprechend dem Ausbreitungskanal zwischen dem mobilen Endgerät (14, 14a, 14b) und dem neuen fest installierten Sende/Empfangseinheit, wobei die Strenge der Bedingung für die Aufnahme mit der Anzahl von Ausbreitungswegen zunimmt, die zwischen dem mobilen Endgerät und den fest installierten Sende/Empfangseinheiten der aktiven Anordnung mit einer Empfangsenergie, die über einem Schwellenwert liegt, ermittelt werden.

36. Radio Network Controller nach Anspruch 34 oder 35, wobei die Mittel zur Verarbeitung der Berichtsmeldungen Mittel umfassen zur Prüfung einer Bedingung für die Entnahme einer fest installierten Sende/Empfangseinheit (13) aus der aktiven Anordnung relativ zu dem mobilen Endgerät (14, 14a, 14b) auf der Grundlage einer globalen Empfangsenergie entsprechend dem Ausbreitungskanal zwischen dem mobilen Endgerät und diesem fest installierten Sende/Empfangseinheit, wobei die Strenge der Bedingung für die Entnahme mit der Anzahl von Ausbreitungswegen abnimmt, die zwischen dem mobilen Endgerät und den anderen fest installierten Sende/Empfangseinheiten der aktiven Anordnung mit einer Empfangsenergie, die über einem Schwellenwert liegt, ermittelt werden.

37. Radio Network Controller nach einem der Ansprüche 34 bis 36, wobei die Verarbeitungsmittel Mittel umfassen, um die folgenden Schritte durchzuführen:

a) Einfügen der fest installierten Sende/Empfangseinheit (13), bei welcher der Ausbreitungskanal eine maximale globale Empfangsenergie aufweist, in die aktive Anordnung und Zuweisung der Anzahl von Ausbreitungswegen, die zu der globalen Empfangsenergie beitragen, zu einer Integer-Variable (k);
b) falls die Integer-Variable kleiner als ein festgelegter Wert ist, Bestimmung, ob ein Akzeptanzkriterium (76) durch die globale Empfangsenergie, die der Ausbreitungskanal bei einer anderen fest installierten Sende/Empfangseinheit aufweist, erfüllt ist;
c) falls das Akzeptanzkriterium erfüllt ist, Einfügen der anderen fest installierten Sende/Empfangseinheit in die aktive Anordnung, Erhöhung der Integer-Variable um die Anzahl von Ausbreitungswegen, die zu der globalen Empfangsenergie, welche das Kriterium erfüllt, beitragen, und Wiederholung der Schritte b) und c).

38. Radio Network Controller nach einem der Ansprüche 22 bis 37, wobei die Mittel zur Verarbeitung der Berichtsmeldungen Mittel zur Bestimmung einer aktiven Anordnung fest installierter Sende-Empfangseinheiten relativ zu dem mobilen Endgerät (14, 14a, 14b) und Mittel zur Regelung der Sendeleistung jeder fest installierten Sende/Empfangseinheit der aktiven Anordnung relativ zu dem mobilen Endgerät (14, 14a, 14b) umfassen.

**39.** Radio Network Controller nach Anspruch 38, wobei die Bestimmung des Befehls zur Regelung der Leistung in Abhängigkeit von Parametern, welche die Daten, die von der energetischen Verteilung in den Ausbreitungsprofilen abhängen, einschließen, sowie von Dämpfungen zwischen dem mobilen Endgerät (14, 14a, 14b) und den fest installierten Sende/ Empfangseinheiten (13) der aktiven Anordnung erfolgt.

**40.** Radio Network Controller nach einem der Ansprüche 22 bis 39, wobei die Bestimmung der Anzahl und des Formats der Kommunikationskanäle in Abhängigkeit von Parametern, welche die Daten, die von der energetischen Verteilung in den Ausbreitungsprofilen abhängen, einschließen, und von einem Mindestdurchsatz, der für die Kommunikation einzuhalten ist, erfolgt.

**41.** Radio Network Controller nach einem der Ansprüche 22 bis 40, wobei die Daten, die von der energetischen Verteilung in den Ausbreitungsprofilen abhängen, eine Differenz zwischen den Empfangszeiten von zwei Ausbreitungswegen, die zwischen dem mobilen Endgerät (14, 14a, 14b) und der fest installierten Sende/Empfangseinheit (13) ermittelt werden, umfassen und wobei die Anzahl von Kommunikationskanälen mit der Differenz steigt und die Kommunikationskanäle einen geringeren Durchsatz haben, wenn die Differenz groß ist.

FIG.1.

RÉSEAU FIXE

11

10 — COMMUTATEUR UMTS

10 — COMMUTATEUR UMTS

Iu

Iu

Iu

12 — RNC

Iur

RNC

Iur

RNC — 12

12

Iub

Iub

Iub

9 — NODE B

NODE B

NODE B

NODE B

NODE B

NODE B

NODE B

NODE B — 9

13

13

13

13

14

14a

14b

EP 1 402 751 B1

FIG.2.

# FIG.3.

# FIG.4.

# FIG.5.

EP 1 402 751 B1

FIG.6.

EP 1 402 751 B1

FIG.7.

```
                    ┌─────────────────────────────┐
              60────┤  RÉCEPTION  NOUVELLE  MESURE │
                    │      CPiCH_Ec / NO ( i )     │
                    └──────────────┬──────────────┘
                                   │
                                   ▼
                         ╱──────────────────╲
                   OUI  ╱   CELLULE i DANS    ╲  NON
              ◄────────┤   L'ENSEMBLE ACTIF ?  ├────────┐
                        ╲                     ╱  61      │
                         ╲──────────────────╱           │
```

ENLEVER CELLULE i DE L'ENSEMBLE ACTIF

MAINTENIR CELLULE i DANS L'ENSEMBLE ACTIF

ADMETTRE CELLULE i DANS L'ENSEMBLE ACTIF

REFUSER CELLULE i DANS L'ENSEMBLE ACTIF

OUI CPiCH_Ec/NO(i)<A-Sr(βi)? NON

OUI CPiCH_Ec/NO(i)>A-Sa (β)? NON

62    63    64    65    66    67

FIG.8.

69 — RÉCEPTION JEU DE MESURES CPiCH_Ec/NO

70 — ORDONNER LES CELLULES MESURÉES
CPiCH_Ec/NO(0)>CPiCH_Ec/NO(1)>···

71 — $k \leftarrow 0$
$i \leftarrow 0$

72 — PLACER CELLULE i
DANS L'ENSEMBLE ACTIF

73 — $k \leftarrow k + \alpha_i$

74 — $k < M$ ?  OUI / NON

75 — $i \leftarrow i + 1$

76 — CPiCH_Ec/NO(i) > CPiCH_Ec/NO(0) - Sa(k) ?  OUI / NON

Fin

EP 1 402 751 B1

## RÉFÉRENCES CITÉES DANS LA DESCRIPTION

### Documents brevets cités dans la description

- WO 9913675 A

- WO 0141382 A

### Littérature non-brevet citée dans la description

- Radio interface Protocol. 3G TS 25.301. 3GPP, Mars 2000
- UTRAN Overall Description. 3G TS 25.401. 3GPP, Janvier 2000
- RRC Protocol Specification. TS 25.331. 3GPP, Juin 2001
- Physical channels and mapping of transport channels onto physical channels (FDD). 3G TS 25.211. 3GPP, Juin 2000
- Multiplexing and channel coding (FDD). 3G TS 25.212. 3GPP, Juin 2000
- Spreading and modulation (FDD). 3G TS 25.213. 3GPP, Mars 2000
- UTRAN Iub Interface NBAP Signalling. 3G TS 25.433. 3GPP, Juin 2001
- Physical layer - Measurements (FDD). 3G TS 25.215. 3GPP, Juin 2000
- Physical Layer procedures (FDD). TS 25.214. 3GPP, Mars 2001